# EUROPÄISCHE PATENTSCHRIFT

(11) **EP 3 602 105 B1**
(45) Veröffentlichungstag und Bekanntmachung des Hinweises auf die Patenterteilung: **01.11.2023**
(21) Anmeldenummer: 18716495.9
(22) Anmeldetag: 26.03.2018
(51) Int. Cl.: G01S 7/481, G02B 26/08, G02B 26/10, G01S 17/42

(54) **WINKELMAGNETFELDSENSOR FÜR SCANNER**
ANGULAR MAGNETIC FIELD SENSOR FOR A SCANNER
CAPTEUR DE CHAMP MAGNÉTIQUE ANGULAIRE POUR SCANNER

(30) Priorität: 24.03.2017 DE 102017002862
(43) Veröffentlichungstag der Anmeldung: 05.02.2020
(73) Patentinhaber: Blickfeld GmbH, 80339 München (DE)
(72) Erfinder: PETIT, Florian, 81247 München (DE)
(74) Vertreter: Kraus & Weisert Patentanwälte PartGmbB
(86) Internationale Anmeldenummer: PCT/DE2018/100275
(87) Internationale Veröffentlichungsnummer: WO 2018/171846

(56) Entgegenhaltungen:
- EP-A1- 2 043 237
- WO-A1-2015/151593
- US-A1- 2001 036 000
- US-A1- 2005 225 821
- US-A1- 2015 036 202
- US-B2- 9 477 078
- KOBAYASHI T ET AL: "PIEZOELECTRIC OPTICAL MICRO SCANNER WITH BUILT-IN TORSION SENSORS", JAPANESE JOURNAL OF APPLIED PHYSICS, JAPAN SOCIETY OF APPLIED PHYSICS, JP, Bd. 46, Nr. 4B, PART 01, 1. April 2007 (2007-04-01), Seiten 2781-2784, XP001505904, ISSN: 0021-4922, DOI: 10.1143/JJAP.46.2781

## Beschreibung

### TECHNISCHES GEBIET

Verschiedene Beispiele betreffen im Allgemeinen einen Scanner für Licht. Insbesondere betreffen verschiedene Beispiele einen Scanner für Laserlicht, der beispielsweise für LIDAR-Messungen verwendet werden kann.

### HINTERGRUND

Die Abstandsmessung von Objekten ist in verschiedenen Technologiefeldern erstrebenswert. Zum Beispiel kann es im Zusammenhang mit Anwendungen des autonomen Fahrens erstrebenswert sein, Objekte im Umfeld von Fahrzeugen zu erkennen und insbesondere einen Abstand zu den Objekten zu ermitteln.

Eine Technik zur Abstandsmessung von Objekten ist die sogenannte LIDAR-Technologie (engl. Light detection and ranging; manchmal auch LADAR). Dabei wird z.B. gepulstes Laserlicht von einem Emitter ausgesendet. Die Objekte im Umfeld reflektieren das Laserlicht. Diese Reflexionen können anschließend gemessen werden. Durch Bestimmung der Laufzeit des Laserlichts kann ein Abstand zu den Objekten bestimmt werden.

Um die Objekte im Umfeld ortsaufgelöst zu erkennen, kann es möglich sein, das Laserlicht zu scannen. Je nach Abstrahlwinkel des Laserlichts können dadurch unterschiedliche Objekte im Umfeld erkannt werden.

In verschiedenen Beispielen kann es erstrebenswert sein, eine LIDAR-Messung mit besonders großer Auflösung durchzuführen. Dabei kann es beispielsweise erstrebenswert sein, einen zweidimensionalen (2-D) Umfeldbereich im Rahmen der LIDAR-Messung zu erfassen. Dazu wird ein 2-D Scanbereich implementiert. Außerdem kann es erstrebenswert sein, das Laserlicht unter wohl definierten Winkeln abzustrahlen. Durch solche Größen wird beispielsweise eine laterale Auflösung der LIDAR-Messung festgelegt.

Referenzimplementierungen verwenden beispielsweise mehrere vertikal beabstandete Laser, um einen 2-D Scanbereich zu implementieren. Solche Techniken sind aber teuer und benötigen signifikanten Bauraum für die mehreren Laser. Außerdem ist eine Auflösung entlang der Richtung der mehreren Laser typischerweise vergleichsweise beschränkt: Referenzimplementierungen weisen zum Beispiel eine Auflösung zwischen 4 und 64 Punkten in dieser Richtung auf.

Außerdem kann es bei hochintegrierten Referenzimplementierungen oftmals nicht oder nur eingeschränkt möglich sein, den Abstrahlwinkel des Laserlichts zu überwachen. Deshalb kann eine laterale Auflösung vergleichsweise gering sein. Zeitliche Drifts können auftreten.

US 2005/225821 A1 beschreibt eine drehbare Gelenkvorrichtung mit einer optischen Oberfläche, wie zum Beispiel einem Spiegel oder einer Brechungsoberfläche, die aus einem Stück Silizium mit reduzierter Biegsamkeit gebildet wird. Die Vorrichtung kann Permanentmagneten umfassen.

US 9 477 078 B2 beschreibt eine MEMS-Vorrichtung umfassend ein Substrat, ein bewegliches Teil, das ein magnetisches Material umfasst und so eingerichtet ist, dass es sich relativ zum Substrat neigt, einen ersten Magnetpol und einen zweiten Magnetpol, die so eingerichtet sind, dass sie ein Magnetfeld an das magnetische Material anlegen, und einen Magnetfelddetektor, der so eingerichtet ist, dass er das Magnetfeld des magnetischen Materials erfasst.

US 2001/036000 A1 beschreibt einen optischen Scanner umfassend einen Scannenmechanismus und eine Schwingstütze. Im Detail umfasst der Scanner einen Permanentmagneten und einen magnetischen Sensor, der eine Amplitude und den Ort des Trennmechanismus bestimmt.

### KURZE BESCHREIBUNG DER ERFINDUNG

Deshalb besteht ein Bedarf für verbesserte Techniken zum Scannen von Licht. Insbesondere besteht ein Bedarf für verbesserte Techniken, um LIDAR-Messungen zu implementieren.

Diese Aufgabe wird von den Merkmalen des Patentanspruchs 1 gelöst. Die Merkmale der abhängigen Patentansprüche definieren Ausführungsformen.

Ein Scanner umfasst einen ersten Spiegel. Der erste Spiegel umfasst eine reflektierende Vorderseite und eine Rückseite. Der Scanner umfasst auch eine erste elastische Aufhängung. Die erste elastische Aufhängung erstreckt sich auf einer der Rückseite des ersten Spiegels zugewendeten Seite, z.B. weg von der Rückseite des ersten Spiegels. Der Scanner umfasst auch einen zweiten Spiegel. Der zweite Spiegel umfasst eine reflektierende Vorderseite und eine Rückseite. Der Scanner umfasst auch eine zweite elastische Aufhängung. Die zweite elastische Aufhängung erstreckt auf einer der Rückseite des zweiten Spiegels zugewendeten Seite, z.B. weg von der Rückseite des zweiten Spiegels. Der Scanner ist eingerichtet, um Licht sequenziell an der Vorderseite des ersten Spiegels und an der Vorderseite des zweiten Spiegels umzulenken.

Durch die Verwendung von zwei Spiegeln kann ein optischer Pfad definiert werden, der sequenziell zunächst an der reflektierenden Vorderseite des ersten Spiegels und anschließend an der reflektierenden Vorderseite des zweiten Spiegels umgelenkt wird. Dadurch kann ein 2-D Scanbereich implementiert werden.

Manchmal kann die mindestens eine elastische Aufhängung auch als elastisches Stützelement oder Scanmodul bezeichnet werden, weil dadurch eine elastische Verbindung zwischen einer Basis - die ein Referenzkoordinatensystem definiert, in welchem z.B. eine Lichtquelle zum Aussenden des Lichts angeordnet sein kann - und einer Umlenkeinheit bereitgestellt wird; die Umlenkeinheit kann ein bewegtes Koordinatensystem gegenüber dem Referenzkoordinatensystem bezeichnen.

Indem sich die erste elastische Aufhängung und die zweite elastische Aufhängung jeweils von der Rückseite des ersten Spiegels bzw. des zweiten Spiegels erstrecken, kann ein besonders hoher Integrationsgrad für den Scanner mit den beiden Spiegeln erreicht werden. Insbesondere im Vergleich zu Referenzimplementierungen, bei denen Aufhängungen lateral in der Spiegelebene angebracht sind, kann es möglich sein, den ersten Spiel und den zweiten Spiegel besonders nah beieinander anzuordnen. Dadurch kann auch erreicht werden, dass eine besonders große Detektionsapertur in Bezug auf einen Detektor durch den ersten Spiegel und den zweiten Spiegel erreicht werden. Beispielsweise kann der optische Pfad bei einem signifikanten Scanwinkel des ersten Spiegels den zweiten Spiegel nicht mehr zentrisch treffen. Je größer der Abstand zwischen den Spiegels, desto größer ist diese Exzentrizität. Dies verringert die Detektionsapertur.

Ein Scanner umfasst mindestens eine elastisch bewegte Scaneinheit. Diese ist eingerichtet, um Licht mittels einem ersten Freiheitsgrad der Bewegung und einem zweiten Freiheitsgrad der Bewegung zweimal umzulenken. Der Scanner umfasst auch mindestens einen Aktuator. Der Scanner umfasst auch eine Steuerung, beispielsweise einen FPGA, Mikrocontroller oder ASIC. Die Steuerung ist eingerichtet, um den mindestens einen Aktuator anzusteuern, um den ersten Freiheitsgrad der Bewegung gemäß einer periodischen Amplitudenmodulationsfunktion anzuregen. Die Amplitudenmodulationsfunktion weist abwechselnd angeordnete aufsteigende Flanken und absteigende Flanken auf. Eine Länge der aufsteigenden Flanken ist dabei mindestens doppelt so groß, wie eine Länge der absteigenden Flanken, optional mindestens viermal so groß, weiter optional mindestens zehnmal so groß. Alternativ könnte auch eine Länge der absteigenden Flanken mindestens doppelt so groß sein, wie eine Länge der aufsteigenden Flanken, optional mindestens viermal so groß, weiter optional mindestens zehnmal so groß.

Ein Scanner umfasst mindestens eine elastisch bewegte Scaneinheit. Diese ist eingerichtet, um Licht mittels einem ersten Freiheitsgrad der Bewegung und einem zweiten Freiheitsgrad der Bewegung zweimal umzulenken. Der Scanner umfasst auch mindestens einen Aktuator. Dieser ist eingerichtet, um den ersten Freiheitsgrad der Bewegung gemäß einer periodischen Amplitudenmodulationsfunktion anzuregen. Die Amplitudenmodulationsfunktion weist abwechselnd angeordnete aufsteigende Flanken und absteigende Flanken auf.

Vorzugsweise ist dabei eine Länge der aufsteigenden Flanken mindestens doppelt so groß, wie eine Länge der absteigenden Flanken, optional mindestens viermal so groß, weiter optional mindestens zehnmal so groß. Alternativ könnte auch eine Länge der absteigenden Flanken mindestens doppelt so groß sein, wie eine Länge der aufsteigenden Flanken, optional mindestens viermal so groß, weiter optional mindestens zehnmal so groß.

Die elastische Scaneinheit wird manchmal auch als flexible Scaneinheit (engl. flexure scan unit) bezeichnet. Die Freiheitsgrade der Bewegung können durch reversible Verformung, d.h. Elastizität, bereitgestellt werden. Typischerweise werden die Freiheitsgrade der Bewegung resonant angeregt.

In manchen Beispielen könnte der Scanner beispielsweise zwei elastisch bewegte Scaneinheiten umfassen. Jede der zwei elastisch bewegten Scaneinheiten könnte dabei einen Spiegel mit einer reflektierenden Vorderseite und einer Rückseite aufweisen, sowie jeweils eine zugeordnete elastische Aufhängung.

Mittels solcher Techniken kann erreicht werden, dass eine Überlagerungsfigur der Bewegung gemäß dem ersten Freiheitsgrad und der Bewegung gemäß dem zweiten Freiheitsgrad zum Implementieren eines 2-D Scanbereichs implementiert wird. Dabei können Totzeiten beim Scannen durch die besonders kurzen absteigenden Flanken reduziert werden. Dies ermöglicht es, den 2-D Scanbereich mit einer großen zeitlichen Auflösung zu scannen. Dies bedeutet, dass eine Wiederholrate für mehrere aufeinanderfolgende LIDAR-Bilder besonders groß sein kann.

Ein Verfahren umfasst das Ansteuern mindestens eines Aktuator. Der mindestens eine Aktuator ist eingerichtet, um einen ersten Freiheitsgrad der Bewegung mindestens einer elastisch bewegten Scaneinheit gemäß einer periodischen Amplitudenmodulationsfunktion anzuregen. Die periodische Amplitudenmodulationsfunktion umfasst abwechselnd angeordnete aufsteigende Flanken und absteigende Flanken. Die mindestens eine elastisch bewegte Scaneinheit umfasst weiterhin einen zweiten Freiheitsgrad der Bewegung. Die mindestens eine elastisch bewegte Scaneinheit lenkt Licht mittels des ersten Freiheitsgrad der Bewegung und mittels des zweiten Freiheitsgrad der Bewegung zweimal um. Eine Länge der aufsteigenden Flanken ist mindestens doppelt so groß, wie eine Länge der absteigenden Flanken, optional mindestens viermal so groß, weiter optional mindestens zehnmal so groß. Alternativ wäre es auch möglich, dass eine Länge der absteigenden Flanken mindestens doppelt so groß ist, wie eine Länge der aufsteigenden Flanken, optional mindestens viermal so groß, weiter optional mindestens zehnmal so groß.

Ein Computerprogrammprodukt umfasst Programmcode, der von einer Steuerung ausgeführt werden kann. Das Ausführen des Programmcodes bewirkt, dass die Steuerung ein Verfahren durchführt. Das Verfahren umfasst das Ansteuern mindestens eines Aktuator. Der mindestens eine Aktuator ist eingerichtet, um einen ersten Freiheitsgrad der Bewegung mindestens einer elastisch bewegten Scaneinheit gemäß einer periodischen Amplitudenmodulationsfunktion anzuregen. Die periodische Amplitudenmodulationsfunktion umfasst abwechselnd angeordnete aufsteigende Flanken und absteigende Flanken. Die mindestens eine elastisch bewegte Scaneinheit umfasst weiterhin einen zweiten Freiheitsgrad der Bewegung. Die mindestens eine elastisch bewegte Scaneinheit lenkt Licht mittels des ersten Freiheitsgrad der Bewegung und mittels des zweiten Freiheitsgrad der Bewegung zweimal um. Eine Länge der aufsteigenden Flanken ist mindestens doppelt so groß, wie eine Länge der absteigenden Flanken, optional mindestens viermal so groß, weiter optional mindestens zehnmal so groß. Alternativ wäre es auch möglich, dass eine Länge der absteigenden Flanken mindestens doppelt so groß ist, wie eine Länge der aufsteigenden Flanken, optional mindestens viermal so groß, weiter optional mindestens zehnmal so groß.

Ein Computerprogramm umfasst Programmcode, der von einer Steuerung ausgeführt werden kann. Das Ausführen des Programmcodes bewirkt, dass die Steuerung ein Verfahren durchführt. Das Verfahren umfasst das Ansteuern mindestens eines Aktuator. Der mindestens eine Aktuator ist eingerichtet, um einen ersten Freiheitsgrad der Bewegung mindestens einer elastisch bewegten Scaneinheit gemäß einer periodischen Amplitudenmodulationsfunktion anzuregen. Die periodische Amplitudenmodulationsfunktion umfasst abwechselnd angeordnete aufsteigende Flanken und absteigende Flanken. Die mindestens eine elastisch bewegte Scaneinheit umfasst weiterhin einen zweiten Freiheitsgrad der Bewegung. Die mindestens eine elastisch bewegte Scaneinheit lenkt Licht mittels des ersten Freiheitsgrad der Bewegung und mittels des zweiten Freiheitsgrad der Bewegung zweimal um. Eine Länge der aufsteigenden Flanken ist mindestens doppelt so groß, wie eine Länge der absteigenden Flanken, optional mindestens viermal so groß, weiter optional mindestens zehnmal so groß. Alternativ wäre es auch möglich, dass eine Länge der absteigenden Flanken mindestens doppelt so groß ist, wie eine Länge der aufsteigenden Flanken, optional mindestens viermal so groß, weiter optional mindestens zehnmal so groß.

Durch die Kombination des Magneten und des Winkelmagnetfeldsensors gemäß Patentanspruch 1 ist es möglich, die Drehung der Umlenkeinheit aufgrund der Torsion genau zu überwachen. Dadurch kann der Winkel, mit welchem das Licht umgelenkt wird, genau überwacht werden. Dadurch kann der Abstrahlwinkel des Lichts genau überwacht werden. Dadurch kann die laterale Auflösung, beispielsweise einer LIDAR-Messung, erhöht werden. Dies kann insbesondere dann erstrebenswert sein, wenn der Scanner zwei Scaneinheiten jeweils mit einem zugehörigen elastischen Element und einer Umlenkeinheit umfasst, an denen sequenziell ein optischer Pfad des Lichts umgelenkt wird. Dort kann nämlich ohne entsprechende Überwachung eine vergrößerte Ungenauigkeit im Abstrahlwinkel vorliegen.

### KURZE BESCHREIBUNG DER FIGUREN

FIG. 1 illustriert schematisch eine Scaneinheit gemäß verschiedener Beispiele.
FIG. 2 illustriert schematisch eine Scaneinheit gemäß verschiedener Beispiele.
FIG. 3 illustriert schematisch eine Scaneinheit gemäß verschiedener Beispiele.
FIG. 4 illustriert schematisch eine Scaneinheit gemäß verschiedener Beispiele.
FIG. 5 illustriert schematisch Aktuatoren zum Anregen von Freiheitsgraden Bewegung der Scaneinheiten gemäß FIGs. 1 - 4.
FIG. 6 illustriert schematisch Aktuatoren zum Anregen von Freiheitsgraden Bewegung der Scaneinheiten gemäß FIGs. 1 - 4.
FIG. 7 illustriert schematisch Aktuatoren zum Anregen von Freiheitsgraden Bewegung der Scaneinheiten gemäß FIGs. 1 - 4.
FIG. 8 illustriert schematisch den Zeitverlauf der Bewegung von Aktuatoren eines Paars von Aktuatoren zum Anregen von Freiheitsgraden der Bewegung der Scaneinheiten gemäß verschiedener Beispiele.
FIG. 9 illustriert schematisch den Zeitverlauf der Bewegung von Aktuatoren eines Paars von Aktuatoren zum Anregen von Freiheitsgraden der Bewegung der Scaneinheiten gemäß verschiedener Beispiele.
FIG. 10 illustriert schematisch das resonante Anregen eines Freiheitsgrads der Bewegung gemäß verschiedener Beispiele.
FIG. 11 illustriert schematisch einen Freiheitsgrad der Bewegung, der gemäß verschiedener Beispiele einer Torsion von elastischen Elementen entspricht.
FIGs. 12 und 13 illustrieren schematisch einen Freiheitsgrad der Bewegung, der gemäß verschiedener Beispiele einer Transversalauslenkung von elastischen Elementen entspricht.
FIG. 14 illustriert schematisch das überlagerte und resonante Anregen von zwei Freiheitsgraden der Bewegung gemäß verschiedener Beispiele.
FIG. 15 illustriert schematisch eine Scaneinheit gemäß der vorliegenden Erfindung.
FIG. 16 illustriert schematisch einen Scanner mit zwei Scaneinheiten gemäß verschiedener Beispiele.
FIG. 17 illustriert schematisch einen Scanner mit zwei Scaneinheiten gemäß verschiedener Beispiele.
FIG. 18 illustriert schematisch einen Scanner mit zwei Scaneinheiten gemäß verschiedener Beispiele.
FIG. 19 illustriert schematisch einen Scanner mit zwei Scaneinheiten gemäß verschiedener Beispiele.
FIG. 20 illustriert schematisch einen Scanner mit zwei Scaneinheiten gemäß verschiedener Beispiele.
FIG. 21 illustriert schematisch einen Scanner mit zwei Scaneinheiten gemäß verschiedener Beispiele.
FIG. 22 illustriert schematisch einen Scanner mit zwei Scaneinheiten gemäß verschiedener Beispiele.
FIG. 23 illustriert schematisch den Zeitverlauf einer Aktuatorbewegung, der durch Aktuatoren gemäß verschiedener Beispiele zum Anregen von Freiheitsgraden der Bewegung der Scaneinheiten bereitgestellt wird.
FIG. 24 illustriert schematisch die Amplitude der Bewegung gemäß einem Freiheitsgrads der Bewegung, die durch den Zeitverlauf der Aktuatorbewegung gemäß dem Beispiel der FIG. 23 erreicht wird.
FIG. 25 illustriert schematisch den Zeitverlauf einer Aktuatorbewegung, der durch Aktuatoren gemäß verschiedener Beispiele zum Anregen von Freiheitsgraden der Bewegung der Scaneinheiten bereitgestellt wird.
FIG. 26 illustriert schematisch die Amplitude der Bewegung gemäß einem Freiheitsgrads der Bewegung, die durch den Zeitverlauf der Aktuatorbewegung gemäß dem Beispiel der FIG. 25 erreicht wird.
FIG. 27 illustriert schematisch eine Überlagerungsfigur, die durch eine zeitliche Überlagerung der Bewegungen gemäß den Beispielen der FIGs. 24 und 26 durch einen Scanner gemäß verschiedener Beispiele implementiert wird.
FIG. 28 illustriert schematisch eine Scaneinheit mit einem Magneten und einem Winkelmagnetfeldsensor gemäß der vorliegenden Erfindung.
FIG. 29A illustriert schematisch eine Orientierung einer Magnetisierung des Magneten gemäß dem Beispiel der FIG. 28 bei Torsion eines elastischen Elements der Scaneinheit.
FIG. 29B illustriert schematisch eine Anordnung des Magneten in Bezug auf den Winkelmagnetfeldsensor gemäß verschiedener Beispiele.
FIG. 30 illustriert schematisch ein LIDAR-System gemäß verschiedener Beispiele.
FIG. 31 illustriert schematisch ein LIDAR-System gemäß verschiedener Beispiele.
FIG. 32 ist ein Flussdiagramm eines beispielhaften Verfahrens.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Funktionale Einheiten können als Hardware, Software oder eine Kombination aus Hardware und Software implementiert werden.

Nachfolgend werden verschiedene Techniken zum Scannen von Licht beschrieben. Die nachfolgend beschriebenen Techniken können zum Beispiel das 2-D Scannen von Licht ermöglichen. Das Scannen kann wiederholtes Aussenden des Lichts unter unterschiedlichen Abstrahlwinkeln bezeichnen. Dazu kann das Licht durch eine Umlenkeinheit einmal oder mehrfach umgelenkt werden.

Die Umlenkeinheit kann beispielsweise durch einen Spiegel und optional durch ein Schnittstellenelement, das den Spiegel an einem elastischen Element fixiert, ausgebildet sein. Die Umlenkeinheit könnte auch ein Prisma anstelle des Spiegels umfassen.

Das Scannen kann das wiederholte Abtasten von unterschiedlichen Punkten in der Umgebung mittels des Lichts bezeichnen. Dazu können sequentiell unterschiedliche Abstrahlwinkel implementiert werden. Die Abfolge von Abstrahlwinkeln kann durch eine Überlagerungsfigur festgelegt sein, wenn z.B. zwei Freiheitsgrade der Bewegung zeitlich - und optional örtlich - überlagert zum Scannen verwendet werden. Z.B. kann die Menge der unterschiedlichen Punkte in der Umgebung und/oder die Menge der unterschiedlichen Abstrahlwinkel einen Scanbereich festlegen. In verschiedenen Beispielen kann das Scannen von Licht durch die zeitliche Überlagerung und optional eine örtliche Überlagerung von zwei Bewegungen entsprechend unterschiedlicher Freiheitsgrade mindestens einer elastischen Aufhängung erfolgen. Dann wird ein 2-D Scanbereich erhalten.

Manchmal wird die Überlagerungsfigur auch als Lissajous-Figur bezeichnet. Die Überlagerungsfigur kann eine Abfolge, mit der unterschiedliche Abstrahlwinkel durch die Bewegung des Stützelements umgesetzt werden, beschreiben.

In verschiedenen Beispielen ist es möglich, Laserlicht zu scannen. Dabei kann zum Beispiel kohärentes oder inkohärentes Laserlicht verwendet werden. Es wäre möglich, polarisiertes oder unpolarisiertes Laserlicht zu verwenden. Beispielsweise wäre es möglich, dass das Laserlicht gepulst verwendet wird. Zum Beispiel können kurze Laserpulse mit Pulsbreiten im Bereich von Femtosekunden oder Pikosekunden oder Nanosekunden verwendet werden. Beispielsweise kann eine Pulsdauer im Bereich von 0,5 - 3 Nanosekunden liegen. Das Laserlicht kann eine Wellenlänge im Bereich von 700 - 1800 nm aufweisen. Aus Gründen der Einfachheit wird nachfolgend vornehmlich Bezug genommen auf Laserlicht; die verschiedenen hierin beschriebenen Beispiele können aber auch zum Scannen von Licht aus anderen Lichtquellen, zum Beispiel Breitbandlichtquellen oder RGB-Lichtquellen, angewendet werden. RGB-Lichtquellen bezeichnen hierin im Allgemeinen Lichtquellen im sichtbaren Spektrum, wobei der Farbraum durch Überlagerung mehrerer unterschiedlicher Farben - beispielsweise rot, grün, blau oder cyan, magenta, gelb - abgedeckt wird.

In verschiedenen Beispielen wird zum Scannen von Licht mindestens ein Stützelement verwendet werden, das eine form- und/oder materialinduzierte Elastizität aufweist. Deshalb könnte des mindestens eine Stützelement auch als Federelement oder elastische Aufhängung bezeichnet werden. Das Stützelement weist ein bewegliches Ende auf. Dann kann mindestens ein Freiheitsgrad der Bewegung des mindestens einen Stützelements angeregt werden, beispielsweise eine Torsion und/oder eine transversale Auslenkung. Dabei können unterschiedliche Ordnungen von Transversalmoden angeregt werden. Durch eine solche Anregung einer Bewegung kann eine Umlenkeinheit, die mit dem beweglichen Ende des mindestens einen Stützelemente verbunden ist, bewegt werden. Deshalb definiert das bewegliche Ende des mindestens einen Stützelements ein Schnittstellenelement.

Es wäre beispielsweise möglich, dass mehr als ein einzelnes Stützelement verwendet wird, z.B. zwei oder drei oder vier Stützelemente. Diese können optional symmetrisch in Bezug zueinander angeordnet sein.

In verschiedenen Beispielen wird zum Scannen des Laserlichts ein bewegliches Ende einer Faser oder mehrerer Fasern als Stützelement verwendet: dies bedeutet, dass das mindestens eine Stützelement durch eine oder mehrere Fasern ausgebildet sein kann. Es können verschiedene Fasern als Stützelemente verwendet werden. Beispielsweise können Lichtfasern verwendet werden, die auch als Glasfasern bezeichnet werden. Dabei ist es aber nicht erforderlich, dass die Fasern aus Glas hergestellt sind. Die Fasern können zum Beispiel aus Kunststoff, Glas oder einem anderen Material hergestellt sein. Beispielsweise können die Fasern aus Quarzglas hergestellt sein. Die Fasern können beispielsweise eine Länge aufweisen, die im Bereich von 3 mm - 10 mm liegt, optional im Bereich von 3,8 mm - 7.5 mm. Beispielsweise können die Fasern ein 70 GPa Elastizität-Modul aufweisen. Dies bedeutet, dass die Fasern elastisch sein können. Beispielsweise können die Fasern bis zu 4 % Materialdehnung ermöglichen. In manchen Beispielen weisen die Fasern einen Kern auf, in welchem das eingespeiste Laserlicht propagiert und durch Totalreflektion an den Rändern eingeschlossen ist (Lichtwellenleiter). Die Faser muss aber keinen Kern aufweisen. In verschiedenen Beispielen können sogenannte Einmoden-Lichtfasern (engl. single mode fibers) oder Mehrmoden-Lichtfasern (engl. multimode fibers) verwendet werden. Die verschiedenen hierin beschriebenen Fasern können zum Beispiel einen kreisförmigen Querschnitt aufweisen. Es wäre zum Beispiel möglich, dass die verschiedenen hierin beschriebenen Fasern einen Durchmesser aufweisen, der nicht kleiner als 50 µm ist, optional nicht <150 µm ist, weiter optional nicht <500 µm ist, weiter optional nicht <1 mm ist. Zum Beispiel können die verschiedenen hierin beschriebenen Fasern verbiegbar bzw. krümmbar ausgestaltet sein, d.h. flexibel bzw. elastisch. Dazu kann das Material der hierin beschriebenen Fasern eine gewisse Elastizität aufweisen. Die Fasern können einen Kern aufweisen. Die Fasern können eine Schutzbeschichtung aufweisen. In manchen Beispielen kann die Schutzbeschichtung zumindest teilweise entfernt sein, z.B. bei den Enden der Fasern.

In anderen Beispielen wäre es auch möglich, dass längliche Elemente mittels MEMS-Techniken hergestellt werden, d.h. mittels geeigneter Lithographie-Prozessschritte beispielsweise durch Ätzen aus einem Wafer hergestellt werden.

Beispielsweise könnte das bewegliche Ende des Stützelements in einer oder zwei Dimensionen - bei einer zeitlichen und örtlichen Überlagerung von zwei Freiheitsgraden der Bewegung - bewegt werden. Dazu können ein oder mehrere Aktuatoren verwendet werden. Beispielsweise wäre es möglich, dass das bewegliche Ende gegenüber einer Fixierung des mindestens einen Stützelements verkippt wird; dies resultiert in einer Krümmung des mindestens einen Stützelements. Dies kann einem ersten Freiheitsgrad der Bewegung entsprechen; dieser kann als Transversalmode (oder manchmal auch als wiggle mode) bezeichnet werden. Alternativ oder zusätzlich wäre es möglich, dass das bewegliche Ende entlang einer Längsachse des Stützelements verdreht wird (Torsionsmode). Dies kann einem zweiten Freiheitsgrad der Bewegung entsprechen. Durch das Bewegen des beweglichen Endes kann erreicht werden, dass Laserlicht unter verschiedenen Winkeln abgestrahlt wird. Dazu kann eine Umlenkeinheit, wie beispielsweise ein Spiegel optional mit geeigneter Schnittstelle zur Fixierung, vorgesehen sein. Dadurch kann ein Umfeld mit dem Laserlicht gescannt werden. Je nach Stärke der Bewegung des beweglichen Endes können unterschiedlich große Scanbereiche implementiert werden.

In den verschiedenen hierin beschriebenen Beispielen ist es jeweils möglich, die Torsionsmode alternativ oder zusätzlich zur Transversalmode anzuregen, d.h. es wäre eine zeitliche und örtliche Überlagerung der Torsionsmode und der Transversalmode möglich. Diese zeitliche und örtliche Überlagerung kann aber auch unterdrückt werden. In anderen Beispielen könnten auch andere Freiheitsgrade der Bewegung implementiert werden.

Beispielsweise kann die Umlenkeinheit ein Prisma oder eine Spiegel umfassen. Beispielsweise könnte der Spiegel durch einen Wafer, etwa einen Silizium-Wafer, oder ein Glassubstrat implementiert sein. Beispielsweise könnte der Spiegel eine Dicke im Beriech von 0,05 µm - 0,1 mm aufweisen. Beispielsweise könnte der Spiegel eine Dicke von 25 µm oder 50 µm aufweisen. Beispielsweise könnte der Spiegel eine Dicke im Bereich von 25 µm bis 75 µm aufweisen. Beispielsweise könnte der Spiegel quadratisch, rechtecksförmig oder kreisförmig ausgebildet sein. Beispielsweise könnte der Spiegel einen Durchmesser von 3 mm bis 12 mm aufweisen oder insbesondere 8 mm.

Im Allgemeinen können solche Techniken zum Scannen von Licht in unterschiedlichsten Anwendungsgebieten eingesetzt werden. Beispiele umfassen Endoskope und RGB-Projektoren und Drucker und Laser-Scanning-Mikroskope. In verschiedenen Beispielen können LIDAR-Techniken angewendet werden. Die LIDAR-Techniken können dazu genutzt werden, um eine ortsaufgelöste Abstandsmessung von Objekten im Umfeld durchzuführen. Zum Beispiel kann die LIDAR-Technik Laufzeitmessungen des Laserlichts zwischen dem Spiegel, dem Objekt und einem Detektor umfassen. Im Allgemeinen können solche Techniken zum Scannen von Licht in unterschiedlichsten Anwendungsgebieten eingesetzt werden. Beispiele umfassen Endoskope und RGB-Projektoren und Drucker. In verschiedenen Beispielen können LIDAR-Techniken angewendet werden. Die LIDAR-Techniken können dazu genutzt werden, um eine ortsaufgelöste Abstandsmessung von Objekten im Umfeld durchzuführen. Zum Beispiel kann die LIDAR-Technik Laufzeitmessungen des Laserlichts umfassen.

Verschiedenen Beispielen liegt die Erkenntnis zugrunde, dass es erstrebenswert sein kann, das Scannen des Laserlichts mit einer hohen Genauigkeit bezüglich des Abstrahlwinkels durchzuführen. Zum Beispiel kann im Zusammenhang mit LIDAR-Techniken eine Ortsauflösung der Abstandsmessung durch eine Ungenauigkeit des Abstrahlwinkels begrenzt sein. Typischerweise wird eine höhere (niedrigere) Ortsauflösung erreicht, je genauer (weniger genau) der Abstrahlwinkel des Laserlichts bestimmt werden kann.

Verschiedenen Beispielen liegt ferner die Erkenntnis zugrunde, dass es erstrebenswert sein kann, dass Scannen des Laserlichts für einen 2-D Scanbereich zu implementieren. Dabei kann es oftmals erstrebenswert sein, durch die zeitliche Überlagerung von zwei Freiheitsgraden der Bewegung und eine entsprechende Überlagerungsfigur, den 2-D Scanbereich zu implementieren. Die verschiedenen hierin beschriebenen Beispiele ermöglichen es, einen hochaufgelösten zweidimensionalen Scanbereich mit einer großen Genauigkeit zu implementieren, wobei der entsprechende Scanner eine vergleichsweise große Integration in einen geringen Bauraum ermöglicht.

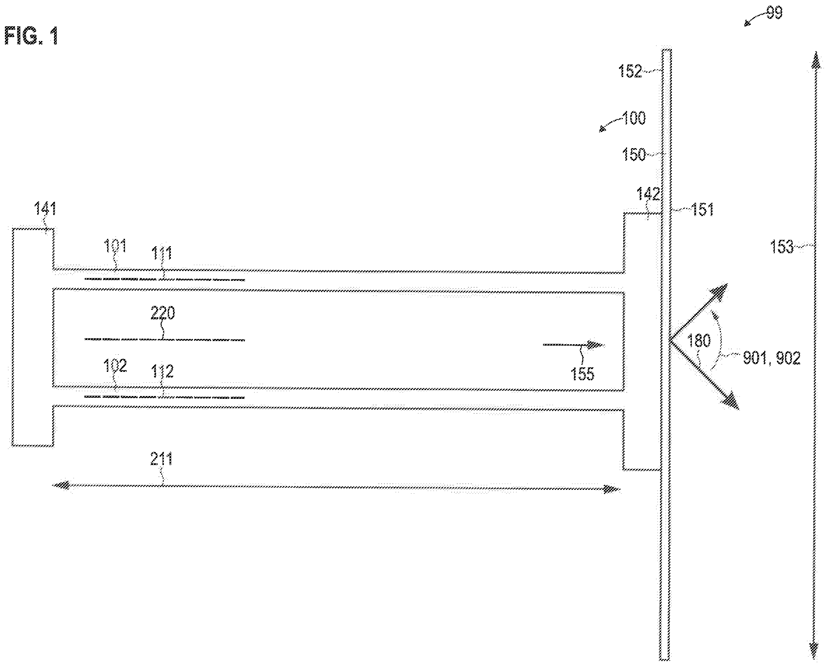

FIG. 1 illustriert Aspekte in Bezug auf ein eine Scaneinheit 99. Die Scaneinheit 99 umfasst ein Scanmodul 100. Das Scanmodul 100 umfasst eine Basis 141, zwei Stützelemente 101, 102, sowie ein Schnittstellenelement 142. Die Stützelemente 101, 102 sind in einer Ebene ausgebildet (Zeichenebene der FIG. 1). Das Scanmodul 100 kann auch als elastische Aufhängung bezeichnet werden.

Dabei sind die Basis 141, die Stützelemente 101, 102, sowie das Schnittstellenelement 142 einstückig ausgebildet. Beispielsweise wäre es möglich, dass die Basis 141, die Stützelemente 101, 102, sowie das Schnittstellenelement 142 mittels MEMS-Prozessen durch Ätzen eines Silizium-Wafers (oder eines anderen Halbleiter-Substrats) erhalten werden. In einem solchen Fall können die Basis 141, die Stützelemente 101, 102, sowie das Schnittstellenelement 142 insbesondere einkristallin ausgebildet sein. In anderen Beispielen könnten die Basis 141, die Stützelemente 101, 102, sowie das Schnittstellenelement 142 jedoch nicht einstückig ausgebildet sein; z.B. könnten die Stützelemente durch Fasern implementiert sein.

Es wäre auch möglich, dass das Scanmodul 100 nur ein einziges Stützelement aufweist oder mehr als zwei Stützelemente aufweist.

Die Scaneinheit 99 umfasst auch einen eine Umlenkeinheit implementierenden Spiegel 150. In dem Beispiel der FIG. 1 ist der Spiegel 150, der auf der Vorderseite eine Spiegeloberfläche 151 mit hoher Reflektivität (beispielsweise größer als 95 % bei einer Wellenlänge von 950 µm, Optional >99 %, weiter optional >99,999 %; z.B. Alu oder Gold in einer Dicke von 80 - 250 nm) für Licht 180 ausbildet, nicht einstückig mit der Basis 141, den Stützelementen 101, 102, sowie dem Schnittstellenelement 142 ausgebildet. Beispielsweise könnte der Spiegel 150 auf das Schnittstellenelement 142 aufgeklebt sein. Das Schnittstellenelement 142 kann nämlich dazu eingerichtet sein, um den Spiegel 150 bzw. die Spiegeloberfläche 151 zu fixieren. Zum Beispiel könnte das Schnittstellenelement 142 für diesen Zweck eine Anlagefläche aufweisen, die eingerichtet ist, um eine entsprechende Anlagefläche des Spiegels 150 zu fixieren. Um den Spiegel 150 mit dem Schnittstellenelement 142 zu verbinden, könnten beispielsweise ein oder mehrere der folgenden Techniken verwendet werden: Kleben; Löten. Der Spiegel weist auch eine Rückseite 152 auf.

Mittels solchen Techniken können große Spiegeloberflächen realisiert werden, z.B. nicht kleiner als 10 mm^2, optional nicht kleiner als 15 mm^2. Dadurch kann im Zusammenhang mit LIDAR-Techniken, die die Spiegeloberfläche 151 auch als Detektorapertur verwenden, eine hohe Genauigkeit und Reichweite erzielt werden.

In dem Beispiel der FIG. 1 erstreckt sich das Scanmodul 100 weg von der Rückseite 152 des Spiegels 150, d.h. auf einer der Rückseite 152 zugewendeten Seite des Spiegels 150. Eine 1-Punkt Aufhängung des Spiegels wird dadurch implementiert.

In dem Beispiel der FIG. 1 weisen die Stützelemente 101, 102 eine Ausdehnung senkrecht zur Spiegeloberfläche 151 auf; diese Ausdehnung könnte z.B. ca. 2 - 8 mm betragen, im Beispiel der FIG. 1. Die Stützelemente 101, 102 sind insbesondere stabförmig entlang entsprechender Längsachsen 111, 112 ausgebildet. In FIG. 1 ist die Oberflächennormale 155 der Spiegeloberfläche 151 dargestellt; die Längsachsen 111, 112 sind parallel zu der Oberflächennormalen 155 orientiert, d. h. schließen mit dieser einen Winkel von 0° ein.

Deshalb ist die Ausdehnung der Stützelemente 101, 102 senkrecht zur Spiegeloberfläche 151 gleich der Länge 211 der Stützelemente 101, 102. Im Allgemeinen wäre es möglich, dass die Länge 211 der Stützelemente 101, 102 nicht kürzer als 2 mm ist, optional nicht kürzer als 4 mm, weiter optional nicht kürzer als 6 mm. Zum Beispiel wäre es möglich, dass die Länge der Stützelemente 101, 102 nicht größer als 20 mm ist, optional nicht größer als 12 mm, weiter optional nicht größer als 7 mm. Wenn mehrere Stützelemente verwendet werden, können diese alle dieselbe Länge aufweisen.

Im Allgemeinen könnte die Länge 211 der Stützelemente 101, 102 im Bereich von 20 %-400 % eines Durchmessers 153 des Spiegels 150 liege. Im Allgemeinen könnte die Länge 211 nicht geringer sein als 20 % des Durchmessers 153, optional nicht geringer sein als 200 % des Durchmessers, weiter optional nicht geringer als 400 %. Dadurch kann einerseits eine gute Stabilität bereitgestellt werden, andererseits können vergleichsweise große Scanbereiche implementiert werden.

Je nach relativer Orientierung der Längsachsen 111, 112 in Bezug auf die Spiegeloberfläche 151, wäre es aber möglich, dass die Ausdehnung der Stützelemente 101, 102 senkrecht zur Spiegeloberfläche 151 kürzer ist, als deren Länge 211 (weil lediglich die Projektion parallel zur Oberflächenormalen 155 berücksichtigt wird). Im Allgemeinen wäre es möglich, dass die Ausdehnung der Stützelemente 101, 102 senkrecht zur Spiegeloberfläche 151 nicht kleiner als 0,7 mm ist. Ein solcher Wert ist größer als die typische Dicke eines Wafers, aus welchem das Scanmodul 100 hergestellt werden kann. Dadurch können besonders große Scanwinkel für das Licht 180 implementiert werden.

Das Material der Stützelemente 101, 102 kann eine Material-induzierte Elastizität der Stützelemente 101, 102 bewirken. Ferner kann die längliche, Stab-artige Form der Stützelemente 101, 102 auch eine Form-indizierte Elastizität der Stützelemente 101, 102 bewirken. Durch eine solche Elastizität der Stützelemente 101, 102 kann eine elastische Verformung zu einer Bewegung des Schnittstellenelements 142 und damit auch des Spiegels 150 erreicht werden. Beispielsweise könnte eine Torsionsmode und/oder eine Transversalmode der Stützelemente 101, 102 verwendet werden, um das Schnittstellenelement 142 - und damit den Spiegel 150 - zu bewegen. Dadurch kann das Scannen von Licht implementiert werden (in FIG. 1 ist der Ruhezustand der Stützelemente 101, 102 dargestellt).

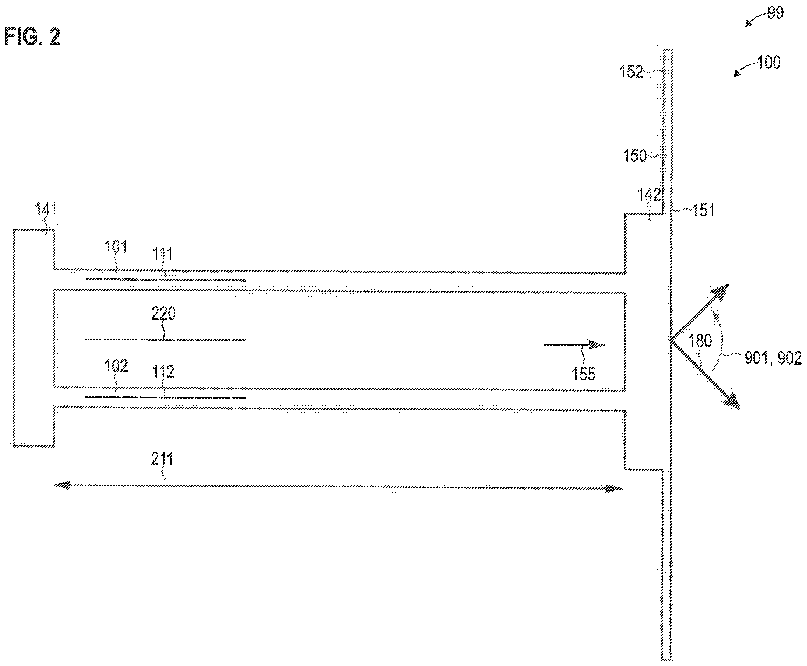

FIG. 2 illustriert Aspekte in Bezug auf ein Scanmodul 100. Das Scanmodul 100 umfasst eine Basis 141, zwei Stützelemente 101, 102, sowie ein Schnittstellenelement 142. Dabei sind die Basis 141, die Stützelemente 101, 102, sowie das Schnittstellenelement 142 einstückig ausgebildet.

Das Beispiel der FIG. 2 entspricht dabei grundsätzlich dem Beispiel der FIG. 1. Jedoch ist in dem Beispiel der FIG. 2 der Spiegel 150 einstückig mit dem Schnittstellenelement 142 bzw. den Stützelementen 101, 102 sowie der Basis 141 ausgebildet. Um eine möglichst große Spiegeloberfläche 151 zu erreichen, ist in dem Beispiel der FIG. 2 ein Überstand über einen Zentralbereich des Schnittstellenelement 142 vorgesehen.

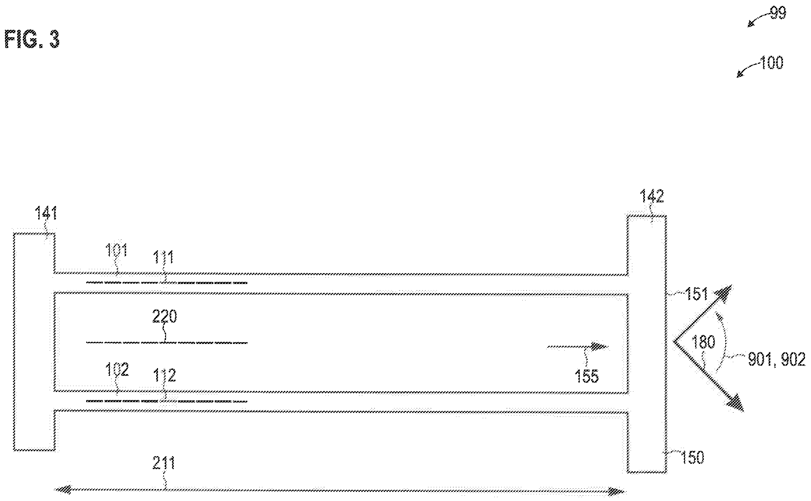

FIG. 3 illustriert Aspekte in Bezug auf ein Scanmodul 100. Das Scanmodul 100 umfasst eine Basis 141, zwei Stützelemente 101, 102, sowie ein Schnittstellenelement 142. Dabei sind die Basis 141, die Stützelemente 101, 102, sowie das Schnittstellenelement 142 einstückig ausgebildet.

Das Beispiel der FIG. 3 entspricht dabei grundsätzlich dem Beispiel der FIG. 2. In dem Beispiel der FIG. 3 sind der Spiegel 150 und das Schnittstellenelement 142 durch ein und dasselbe Element implementiert. Die die Umlenkeinheit implementierende Spiegeloberfläche 151 ist auf dem Schnittstellenelement 142 direkt aufgebracht. Dies ermöglicht einen besonders einfachen Aufbau und eine einfache Herstellung.

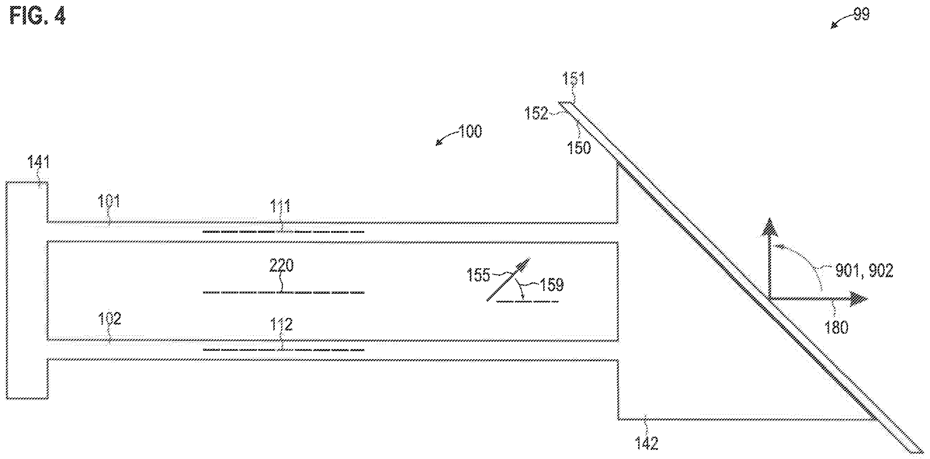

FIG. 4 illustriert Aspekte in Bezug auf ein Scanmodul 100. Das Scanmodul 100 umfasst eine Basis 141, zwei Stützelemente 101, 102, sowie ein Schnittstellenelement 142. Dabei sind die Basis 141, die Stützelemente 101, 102, sowie das Schnittstellenelement 142 einstückig ausgebildet.

Das Beispiel der FIG. 4 entspricht dabei grundsätzlich dem Beispiel der FIG. 1. In dem Beispiel der FIG. 4 sind jedoch die Längsachsen 111, 112 der Stützelemente 101, 102 nicht senkrecht zur Spiegeloberfläche 151 orientiert. In FIG. 4 ist der Winkel 159 zwischen der Oberflächennormalen 155 der Spiegeloberfläche 151 und den Längsachsen 111, 112 dargestellt. Der Winkel 159 beträgt in dem Beispiel der FIG. 4 45°, könnte aber im Allgemeinen im Bereich von -60° bis +60° liegen.

Eine solche Verkippung der Spiegeloberfläche 151 gegenüber den Längsachsen 111, 112 kann insbesondere dann vorteilhaft sein, wenn die Torsionsmode der Stützelemente 101, 102 zur Bewegung des Spiegels 150 verwendet wird. Dann kann ein Periskop-artiges Scannen des Lichts 180 mittels der Scaneinheit 99 implementiert werden.

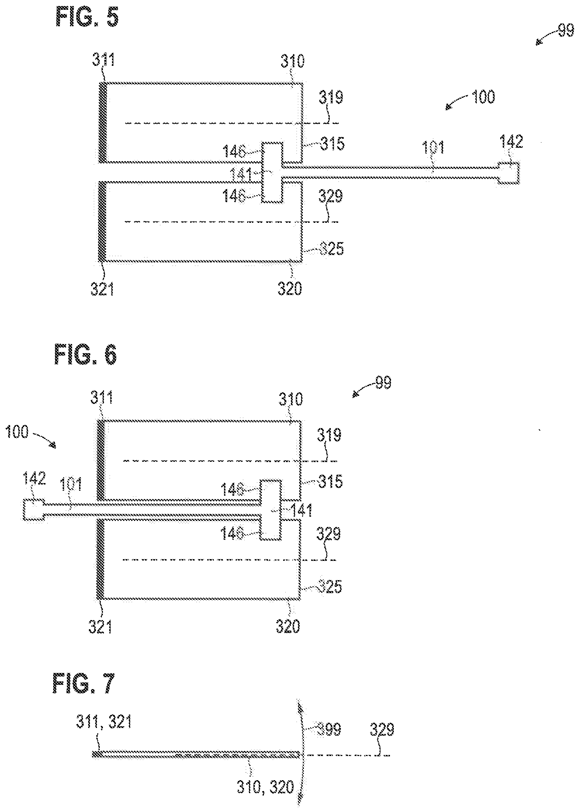

FIG. 5 illustriert Aspekte in Bezug auf eine Scaneinheit 99. Die Scaneinheit 99 umfasst das Scanmodul 100, welches zum Beispiel gemäß den verschiedenen anderen hierin beschriebenen Beispielen konfiguriert sein könnte (jedoch ist in FIG. 5A beispielhaft ein Scanmodul 100 mit lediglich einem einzelnen Stützelement 101 dargestellt).

FIG. 5 illustriert insbesondere Aspekte in Bezug auf Piezoaktuatoren 310, 320. In verschiedenen Beispielen können zur Anregung des Stützelements 101 Biegepiezoaktuatoren 310, 320 verwendet werden. Die Piezoaktuatoren 310, 320 können z.B. durch eine geeignete Steuerung - z.B. über einen Treiber - angesteuert werden.

Zum Beispiel können im Allgemeinen ein erster und ein zweiter Biegepiezoaktuator verwendet werden. Es wäre möglich, dass der erste Biegepiezoaktuator und/oder der zweite Biegepiezoaktuator plattenförmig ausgebildet sind. Im Allgemeinen kann eine Dicke der Biegepiezoaktuatoren z.B. im Bereich von 200 µm - 1 mm liegen, optional im Bereich von 300 µm - 700 µm. Es wäre beispielsweise möglich, dass der erste Biegepiezoaktuator und/oder der zweite Biegepiezoaktuator eine Schichtstruktur umfassend eine alternierende Anordnung mehrerer piezoelektrischer Materialien aufweist. Diese können einen unterschiedlich starken piezoelektrischen Effekt aufweisen. Dadurch kann eine Verbiegung bewirkt werden, ähnlich einem Bimetallstreifen bei Temperaturänderungen. Beispielsweise ist es möglich, dass der erste Biegepiezoaktuator und/oder der zweite Biegepiezoaktuator an einer Fixierstelle fixiert sind: ein der Fixierstelle gegenüberliegendes Ende kann dann aufgrund einer Verbiegung bzw. Krümmung des ersten Biegepiezoaktuators und/oder des zweiten Biegepiezoaktuators bewegt werden.

Durch die Verwendung von Biegepiezoaktuatoren kann eine besonders effiziente und starke Anregung erreicht werden. Die Biegepiezoaktuatoren können nämlich die Basis 141 bewegen und insbesondere - zum Anregen einer Torsionsmode des mindestens einen Stützelements - verkippen. Außerdem kann es möglich sein, eine hohe Integration der Vorrichtung zur Anregung zu erzielen. Dies kann bedeuten, dass der benötigte Bauraum besonders gering dimensioniert werden kann.

Insbesondere in dem Beispiel der FIG. 5 sind die Piezoaktuatoren 310, 320 als Biegepiezoaktuatoren ausgebildet. Dies bedeutet, dass das Anlegen einer Spannung an elektrischen Kontakten der Biegepiezoaktuatoren 310, 320 eine Krümmung bzw. Verbiegung der Biegepiezoaktuatoren 310, 320 entlang deren Längsachsen 319, 329 bewirkt. Dazu weisen die Biegepiezoaktuatoren 310, 320 eine Schichtstruktur auf (in FIG. 5 nicht dargestellt und senkrecht zur Zeichenebene orientiert). Derart wird ein Ende 315, 325 der Biegepiezoaktuatoren 310, 320 gegenüber einer Fixierstelle 311, 321 senkrecht zur jeweiligen Längsachse 319, 329 ausgelenkt (die Bewegung ist in dem Beispiel der FIG. 5 senkrecht zur Zeichenebene orientiert). Die Bewegung 399 der Biegepiezoaktuatoren 310, 320 (Aktuatorbewegung) aufgrund der Verbiegung ist in FIG. 6 dargestellt.

FIG. 7 ist eine Seitenansicht der Biegepiezoaktuatoren 310, 320. FIG. 7 zeigt die Biegepiezoaktuatoren 310, 320 in einer Ruhelage der Scaneinheit 99, zum Beispiel ohne Treiber-Signal bzw. Verspannung/Krümmung.

Wieder Bezug nehmend auf FIG. 5: Beispielsweise könnten die Fixierstelle in 311, 321 eine starre Verbindung zwischen den Biegepiezoaktuatoren 310, 320 und einem Gehäuse der Scaneinheit 99 (in FIG. 5 nicht dargestellt) herstellen und ortsfest in einem Referenzkoordinatensystem angeordnet sein.

Die Basis 141 könnte eine Längsausdehnung der Längsachsen 319, 329 aufweisen, die im Bereich von 2-20 % der Länge der Biegepiezoaktuatoren 310, 320 entlang der Längsachsen 319, 329 ist, optional im Bereich von 5 - 15 %. Dadurch kann eine genügen starke Anregung erreicht werden; die Basis 141 dämpft die Bewegung der Biegepiezoaktuatoren 310, 320 dann nur vergleichsweise schwach.

Im Beispiel der FIG. 5 sind die Biegepiezoaktuatoren 310, 320 im Wesentlichen parallel zueinander angeordnet. Es wären auch Verkippungen der Längsachsen 319, 329 zueinander möglich, insbesondere solange diese in einer Ebene liegen.

Aus dem Beispiel der FIG. 5 ist ersichtlich, dass die Verbindung der Biegepiezoaktuatoren 310, 320 mit dem Stützelement 101 über die Randbereiche 146 der Basis 141 implementiert wird. Weil diese Randbereiche 146 eine Elastizität aufweisen, kann die Verbiegung 399 aufgenommen werden und führt zu einer Auslenkung der Basis 141. Dadurch können ein oder mehrere Freiheitsgrade der Bewegung des Schnittstellenelement 101 gekoppelt über die Basis 141 angeregt werden. Dadurch wird eine besonders effiziente und platzsparende Anregung erzielt.

In dem Beispiel der FIG. 5 erstrecken sich die Biegepiezoaktuatoren 310, 320 weg von dem Schnittstellenelement 142. Es wäre aber auch möglich, dass die Biegepiezoaktuatoren 310, 320 sich entlang zumindest 50 % Ihrer Länge hin zu dem Schnittstellenelement 142 erstrecken. Dadurch kann eine besonders kompakte Anordnung erreicht werden. Das ist in FIG. 6 gezeigt.

Das Beispiel der FIG. 6 entspricht dabei grundsätzlich dem Beispiel der FIG. 6. Dabei erstrecken sich aber die Biegepiezoaktuatoren 310, 320 hin zum Schnittstellenelement 142 bzw. hin zu einem frei beweglichen Ende des mindestens einen Stützelements 101. Dadurch kann ein besonders kompakter Aufbau der Scaneinheit 99 erreicht werden.

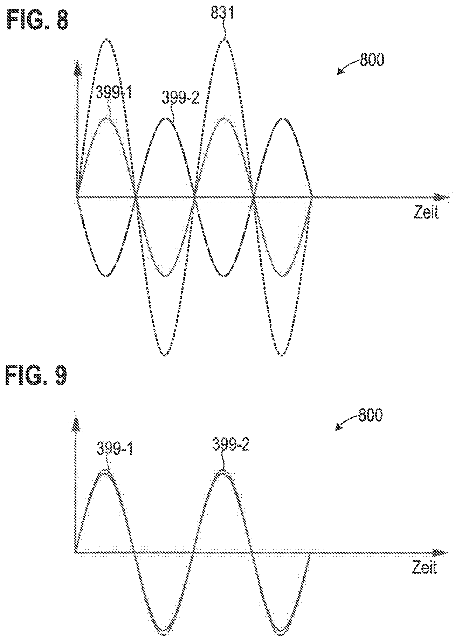

FIG. 8 illustriert schematisch Aspekte in Bezug auf eine Bewegung 399-1, 399-2 der Biegepiezoaktuatoren 310, 320. Durch eine entsprechende Bewegung 399-1, 399-2 kann ein Kraftfluss auf die Stützelemente 101, 102 übertragen werden, sodass ein oder mehrere Freiheitsgrade der Bewegung angeregt werden können.

In anderen Beispielen können andere Typen von Aktuatoren verwendet werden. Z.B. könnten Aktuatoren verwendet werden, die mittels eines Magnetfelds eine Anregung kontaktlos übertragen. Dann kann ein der Bewegung 399-1, 399-2 entsprechender Kraftfluss auch anderweitig implementiert werden.

In dem Beispiel der FIG. 8 erfolgt eine Sinus-förmige Bewegung 399-1, 399-2 der Biegepiezoaktuatoren 310, 320, wobei 180° Phasenversatz zwischen den Bewegungen 399-1, 399-2 (durchgezogene und gestrichelte Linien in FIG. 8) vorliegt. Dadurch erfolgt eine Verkippung der Basis 141 (zum Beispiel in Bezug auf die Zeichenebene der FIGs. 1-4), wodurch eine Torsionsmode besonders effizient angeregt werden kann.

In FIG. 8 ist auch die relative Aktuatorbewegung 831 als Versatz bzw. Abstand in Richtung der Bewegung 399-1, 399-2 zwischen den Enden 315, 325 der Biegepiezoaktuatoren 310, 320 aufgrund der Bewegungen 399-1, 399-2 dargestellt (gepunktete Linie in FIG. 8).

FIG. 9 illustriert schematisch Aspekte in Bezug auf eine Bewegung 399-1, 399-2 der Biegepiezoaktuatoren 310, 320. Durch eine entsprechende Bewegung 390-1, 399-2 kann ein Kraftfluss auf die Stützelemente 101, 102 übertragen werden, sodass ein oder mehrere Freiheitsgrade der Bewegung angeregt werden können.

Das Beispiel der FIG. 9 entspricht grundsätzlich dem Beispiel der FIG. 8, wobei kein Phasenversatz zwischen den Bewegungen 399-1, 399-2 vorliegt. Dadurch erfolgt eine Auf-Ab-Bewegung der Basis 141 (zum Beispiel in Bezug auf die Zeichenebene der FIGs. 1-4), wodurch eine Transversalmode besonders effizient angeregt werden kann.

In FIG. 9 ist die Aktuatorbewegung 831 gleich 0.

In manchen Beispielen wäre es möglich, dass die Bewegung der Biegepiezoaktuatoren 310, 320 - oder ein anderweitig gestalteter Kraftfluss eines geeigneten Aktuator - eine zeitliche und örtliche Überlagerung mehrerer Freiheitsgrade der Bewegung anregt. Dies kann beispielsweise durch eine Überlagerung der Bewegungen 399-1, 399-2 gemäß den Beispielen der FIGs. 8 und 9 erfolgen. Es kann also eine Superposition der gleich- und gegenphasigen Bewegungen 399-1, 399-2 verwendet werden.

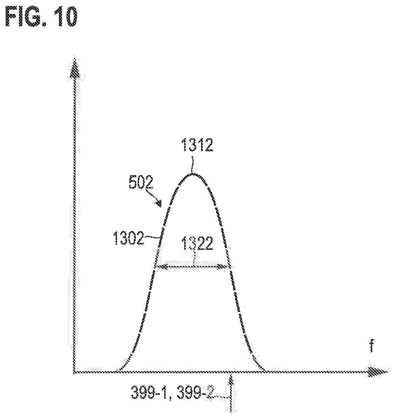

FIG. 10 illustriert schematisch Aspekte in Bezug auf eine Bewegung 399-1, 399-2 der Biegepiezoaktuatoren 310, 320. Insbesondere illustriert FIG. 10 die Bewegung 399-1, 393-2 im Frequenzraum. FIG. 10 illustriert eine Frequenz der Bewegung 399-1, 399-2 in Bezug auf eine Resonanzkurve 1302 einer Torsionsmode 502. Die Resonanzkurve 1302 ist durch eine Halbwertsbreite 1322 sowie ein Maximum 1312 charakterisiert. In dem Beispiel der FIG. 10 erfolgt eine resonante Anregung, weil die Frequenz der Bewegung 399-1, 399-2 innerhalb der Resonanzkurve 1302 angeordnet ist.

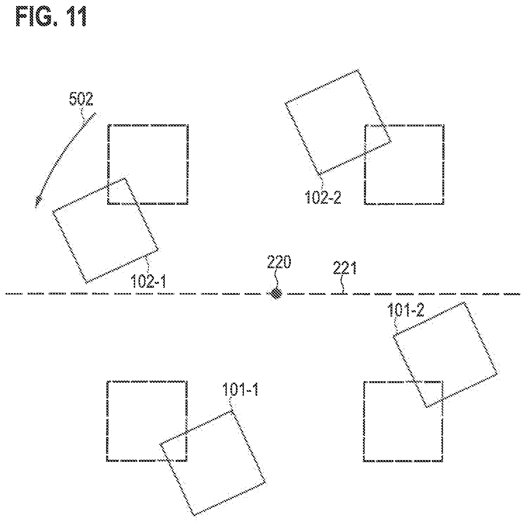

FIG. 11 illustriert Aspekte in Bezug auf die Torsionsmode 502. FIG. 11 illustriert schematisch die Auslenkung der Torsionsmode 502 für eine Scaneinheit 99 mit vier Stützelementen 101-1, 101-2, 102-1, 102-2 (in FIG. 11 ist der ausgelenkte Zustand mit den durchgezogenen Linien dargestellt und der Ruhezustand mit den gestrichelten Linien dargestellt).

In FIG. 11 ist die Torsionsachse der Torsionsmode 220 deckungsgleich mit der Zentralachse 220. In dem Beispiel der FIG. 11 sind die Stützelemente 101-1, 102-1, 101-2, 102-2 rotationssymmetrischer in Bezug auf eine Zentralachse 220 angeordnet. Insbesondere liegt eine vierzählige Rotationssymmetrie vor. Das Vorhandensein einer Rotationssymmetrie bedeutet beispielsweise, dass das System der Stützelemente 101-1, 102-1, 101-2, 102-2 durch Rotation in sich selbst überführt werden kann. Die Zähligkeit der Rotationssymmetrie bezeichnet, wie häufig pro 360° Drehwinkel das System der Stützelemente 101-1, 102-1, 101-2, 102-2 in sich selbst überführt werden kann. Im Allgemeinen könnte die Rotationssymmetrie n-zählig sein, wobei n die Anzahl der verwendeten Stützelemente bezeichnet.

Durch die rotationssymmetrische Anordnung mit hoher Zähligkeit kann folgender Effekt erzielt werden: Nichtlinearitäten bei der Anregung der Torsionsmode 502 können reduziert bzw. unterdrückt werden. Dies kann durch folgendes Beispiel plausibilisiert werden: zum Beispiel könnten die Stützelemente 101-1, 102-1, 101-2, 102-2 derart angeordnet werden, dass die Längsachsen und die Zentralachse 220 alle in einer Ebene liegen. Dann würde die Rotationssymmetrie zweizählig sein (und nicht vierzählig, wie in dem Beispiel der FIG. 11). In einem solchen Fall weisen die orthogonalen Transversalmoden (unterschiedliche Richtungen senkrecht zur Zentralachse 220) unterschiedliche Frequenzen auf - aufgrund unterschiedlicher Trägheitsmomente. Damit dreht sich beispielsweise die Richtung der niederfrequenten Transversalmode zusammen mit der Rotation bei Anregung der Torsionsmode 502. Dadurch wird ein parametrischer Oszillator ausgebildet, denn die Eigenfrequenzen variieren als Funktion des Drehwinkels bzw. damit als Funktion der Zeit. Das Übertragen von Energie zwischen den verschiedenen Zuständen des parametrischen Oszillators bewirkt Nichtlinearitäten. Indem eine Rotationssymmetrie mit hoher Zähligkeit verwendet wird, kann das Ausbilden des parametrischen Oszillators verhindert werden. Vorzugsweise können die Stützelemente so angeordnet werden, dass keine Abhängigkeit der Eigenfrequenzen vom Torsionswinkel auftreten.

Indem Nichtlinearitäten bei der Anregung der Torsionsmode der Stützelemente 101-1, 102-1, 101-2, 102-2 vermieden werden, kann erreicht werden, dass besonders große Scanwinkel des Lichts durch die Torsionsmode 502 erzielt werden können.

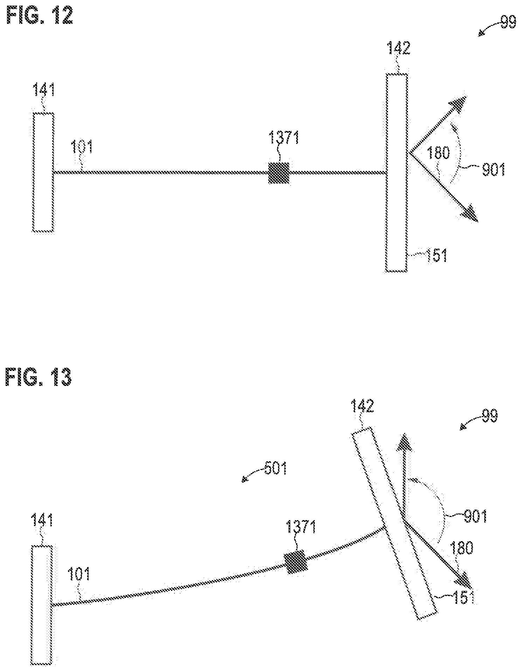

FIG. 12 illustriert Aspekte in Bezug auf eine Scaneinheit 99. In dem Beispiel der FIG. 12 umfasst die Scaneinheit 99 einzelnes Stützelement 101 mit einem optionalen Wuchtgewicht 1371. Deshalb erfolgt bei Anregung der Transversalmode 501 eine Verkippung der Spiegeloberfläche 151. Das ist in FIG. 13 dargestellt. In FIG. 13 ist insbesondere die Transversalmode 501 niedrigster Ordnung dargestellt. In anderen Beispielen wäre es auch möglich, dass zum Scannen von Licht 180 eine Transversalmode höherer Ordnung verwendet wird, wobei dann die Auslenkung des Stützelements 101 an bestimmten Positionen entlang der Länge 211 des Stützelements 101 gleich Null wäre (sog. Knoten oder Bauch der Auslenkung).

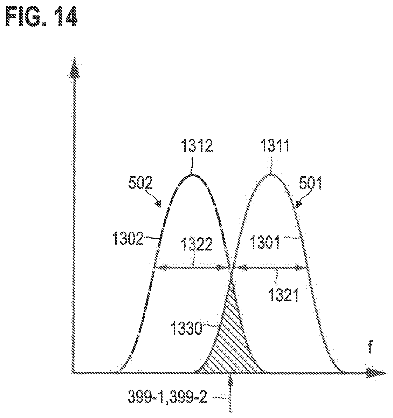

FIG. 14 illustriert Aspekte in Bezug auf Resonanzkurven 1301, 1302 der Freiheitsgrade der Bewegung 501, 502, mittels welcher beispielsweise eine Überlagerungsfigur für einen 2-D Scanbereich implementiert werden kann. FIG. 14 illustriert dabei die Amplitude der Anregung des jeweiligen Freiheitsgrads der Bewegung 501, 502. Ein Resonanzspektrum gemäß dem Beispiel der FIG. 14 kann insbesondere dann erstrebenswert sein, wenn eine zeitliche und örtliche Überlagerung der verschiedenen Freiheitsgrade der Bewegung 501, 502 des mindestens einen Stützelements 101, 102 für das 2-D Scannen gewünscht ist.

In dem Beispiel der FIG. 14 könnten die beiden Resonanzkurven 1301, 1302 zeitlich und örtlich angeregt werden, z.B. indem eine einzelne Scaneinheit 99 verwendet wird, um die unterschiedlichen Freiheitsgrade der Bewegung 501, 502 zu implementieren. Es wäre aber auch möglich, dass in dem Beispiel der FIG. 14 die beiden Resonanzkurven 1301, 1302 zeitlich überlagert angeregt werden, jedoch nicht örtlich überlagert. Dazu wäre es möglich, dass eine erste Scaneinheit 99 verwendet wird, um einen Freiheitsgrad der Bewegung 501, 502 gemäß der Resonanzkurve 1301 zu implementieren, sowie eine zweite Scaneinheit 99 verwendet wird, um den Freiheitsgrad der Bewegung 501, 502 gemäß der Resonanzkurve 1302 zu implementieren.

Die Resonanzkurve 1301 der Transversalmode 501 weist ein Maximum 1311 auf (durchgezogene Linie). In FIG. 14 ist auch die Resonanzkurve 1302 der Torsionsmode 502 dargestellt (gestrichelte Linie). Die Resonanzkurve 1302 weist ein Maximum 1312 auf.

Das Maximum 1312 der Torsionsmode 502 ist bei einer geringeren Frequenz als das Maximum 1311 der Transversalmode 501, die z.B. die Transversalmode 501 niedrigster Ordnung sein könnte. Dadurch kann erreicht werden, dass das Scanmodul besonders robust gegenüber äußeren Störeinflüssen wie Vibrationen etc. ist. Dies ist der Fall, da solche äußeren Anregungen typischerweise die Transversalmode 501 besonders effizient anregen, jedoch die Torsionsmode 502 nicht besonders effizient anregen.

Beispielsweise könnten die Resonanzkurven 1301, 1302 Lorentz-förmig sein. Dies wäre der Fall, wenn die entsprechenden Freiheitsgrade der Bewegung 501, 502 durch einen harmonischen Oszillator beschrieben werden können.

Die Maxima 1311, 1312 sind gegeneinander in der Frequenz verschoben. Beispielsweise könnte der Frequenzabstand zwischen den Maxima 1311, 1312 im Bereich von 5 Hz bis 500 Hz liegen, optional im Bereich von 10 Hz bis 200 Hz, weiter optional im Bereich von 30 Hz bis 100 Hz.

In FIG. 14 sind auch die Halbwertsbreiten 1321, 1322 der Resonanzkurven 1301, 1302 dargestellt. Typischerweise wird die Halbwertsbreite durch die Dämpfung des entsprechenden Freiheitsgrads der Bewegung 501, 502 definiert. In dem Beispiel der FIG. 14 sind die Halbwertsbreiten 1321, 1322 gleich; im Allgemeinen könnten die Halbwertsbreiten 1321, 1322 jedoch verschieden voneinander sein.

In dem Beispiel der FIG. 14 weisen die Resonanzkurven 1301, 1302 einen Überlappbereich 1330 auf (dunkel dargestellt). Dies bedeutet, dass die Transversalmode 501 und die Torsionsmode 502 entartet sind. In dem Überlappbereich 1330 weist sowohl die Resonanzkurve 1301 eine signifikante Amplituden auf, als auch die Resonanzkurve 1302. Beispielsweise wäre es möglich, dass die Amplituden der Resonanzkurven 1301, 1302 in dem Überlappbereich jeweils nicht kleiner als 10 % der entsprechenden Amplituden am jeweiligen Maximum 1311, 1312 sind, optional jeweils nicht <5 %, weiter optional jeweils nicht < 1 %. Durch den Überlappbereich 1330 kann erreicht werden, dass die beiden Freiheitsgrade der Bewegung 501, 502 gekoppelt angeregt werden können, nämlich jeweils resonant bei derselben Frequenz. Die Frequenz liegt zwischen den beiden Maxima 1311, 1312 Dadurch kann die zeitliche und örtliche Überlagerung erzielt werden. Andererseits können aber nichtlineare Effekte durch Kopplung zwischen den beiden Freiheitsgraden der Bewegung 501, 502 unterdrückt bzw. vermieden werden.

Anstatt der Verwendung unterschiedlicher Freiheitsgrade der Bewegung 501, 502 - in dem Beispiel der FIG. 14 einer Torsionsmode 502 und einer Transversalmode 501 - könnte eine Überlagerungsfigur auch durch doppelte Verwendung desselben Freiheitsgrads der Bewegung erreicht werden. Beispielsweise könnte die Torsionsmode 502 einer ersten Scaneinheit angeregt werden, sowie die Torsionsmode 502 einer zweiten Scaneinheit. Dabei erfolgt also keine örtliche Überlagerung der beiden Torsionsmoden, die vielmehr unterschiedlichen Scaneinheiten 99 zugeordnet sein können. Alternativ wäre es auch beispielsweise möglich, die Transversalmode 501 einer ersten Scaneinheit anzuregen, sowie die Transversalmode 501 einer zweiten Scaneinheit. Auch in solchen vorgenannten Fällen der doppelten Verwendung desselben Freiheitsgrads der Bewegung in unterschiedlichen Scaneinheit kann sich - beispielsweise aufgrund von Fertigungstoleranzen oder gezielter baulicher Variation zwischen den Scaneinheiten etc. - ein gewisser Abstand zwischen den Maxima der Resonanzkurven ergeben.

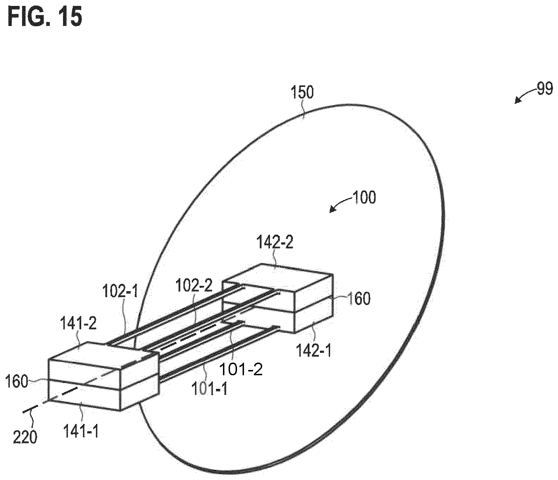

FIG. 15 illustriert Aspekte in Bezug auf eine erfindungsgemäße Scaneinheit 99. In der FIG. 15 ist ein Scanmodul 100 dargestellt, welches ein erstes Paar von Stützelementen 101-1, 102-1 aufweist, sowie ein zweites Paar von Stützelementen 102-1, 102-2. Das erste Paar von Stützelementen 101-1, 102-1 ist in einer Ebene angeordnet; das zweite Paar von Stützelementen 101-2, 102-2 ist auch in einer Ebene angeordnet. Diese Ebenen sind parallel zueinander und versetzt zueinander angeordnet.

In der FIG. 15 können beispielsweise zwei Scanmodule 100 gemäß dem Beispiel der FIG. 4 kombiniert werden. Jedes Paar von Stützelementen ist dabei einer entsprechenden Basis 141-1, 141-2, sowie einem entsprechenden Schnittstellenelement 142-1, 142-2 zugeordnet. Beide Schnittstellenelemente 142-1, 142-2 stellen dabei eine Verbindung mit einem Spiegel 150 her. Derart kann erreicht werden, dass ein besonders stabiles Scanmodul 100 bereitgestellt werden kann, welches eine große Anzahl von Stützelementen aufweist. Insbesondere kann das Scanmodul 100 Stützelemente aufweisen, die in unterschiedlichen Ebenen angeordnet sind. Dies kann eine besonders große Robustheit ermöglichen.

Aus FIG. 15 ist auch ersichtlich, dass die Basis 141-1 nicht einstückig mit der Basis 141-2 ausgebildet ist. Außerdem ist das Schnittstellenelement 142-1 nicht einstückig mit dem Schnittstellenelement 142-2 ausgebildet. Auch die Stützelemente 101-1, 102-1 sind nicht einstückig mit den Stützelementen 102-1, 102-2 ausgebildet. Insbesondere wäre es möglich, dass die verschiedenen vorgenannten Teile aus unterschiedlichen Bereichen eines Wafers gefertigt werden und anschließend beispielsweise durch Kleben oder anodisches Bonden miteinander verbunden werden. Andere Beispiele für Verbindungstechniken umfassen: Fusionsbonden; Fusion- bzw. Direkt-Bonden; Eutektisches Bonden; Thermokompressions Bonden; und Adhäsives Bonden. Entsprechende Verbindungsflächen 160 sind in FIG. 15 gekennzeichnet. Durch solche Techniken kann erreicht werden, dass das Scanmodul 100 besonders einfach hergestellt werden kann. Insbesondere ist es nicht erforderlich, dass das komplette Scanmodul 100 einstückig bzw. integriert aus einem Wafer hergestellt werden muss. Vielmehr kann das Scanmodul 100 in einem zweistufigen Herstellungsprozess erzeugt werden. Gleichzeitig kann dies jedoch die Robustheit nicht signifikant herabsetzen: aufgrund der großflächigen Verbindungsflächen 160 kann eine besonders stabile Verbindung zwischen der Basis 141-1 und der Basis 141-2 bzw. dem Schnittstellenelement 142-1 und dem Schnittstellenelement 142-2 hergestellt werden.

Dabei ist es jedoch möglich, dass die Basis 141-1, die Stützelemente 101-1, 102-1, sowie das Schnittstellenelement 142-1 durch Spiegelung an einer Symmetrieebene (in welcher auch die Verbindungsflächen 160 liegen) auf die Basis 141-2, die Stützelemente 102-1, 102-2, sowie das Schnittstellenelement 142-2 abgebildet werden kann. Dadurch kann ein hochsymmetrischer Aufbau erreicht werden. Insbesondere kann ein rotationssymmetrischer Aufbau erreicht werden. Die Rotationssymmetrie kann dabei eine Zähligkeit von *n*=4 aufweisen; d.h. gleich der Anzahl der verwendeten Stützelemente 101-1, 101-2, 102-1, 102-2. Ein solcher symmetrischer Aufbau in Bezug auf die Zentralachse 220 kann insbesondere Vorteile in Bezug auf die Anregung der Torsionsmode 502 aufweisen. Nichtlinearitäten können vermieden werden.

Beispielsweise kann eine Scaneinheit 99 gemäß dem Beispiel der FIG. 15 für die Torsionsmode 502 gemäß dem Beispiel der FIG. 11 verwendet werden.

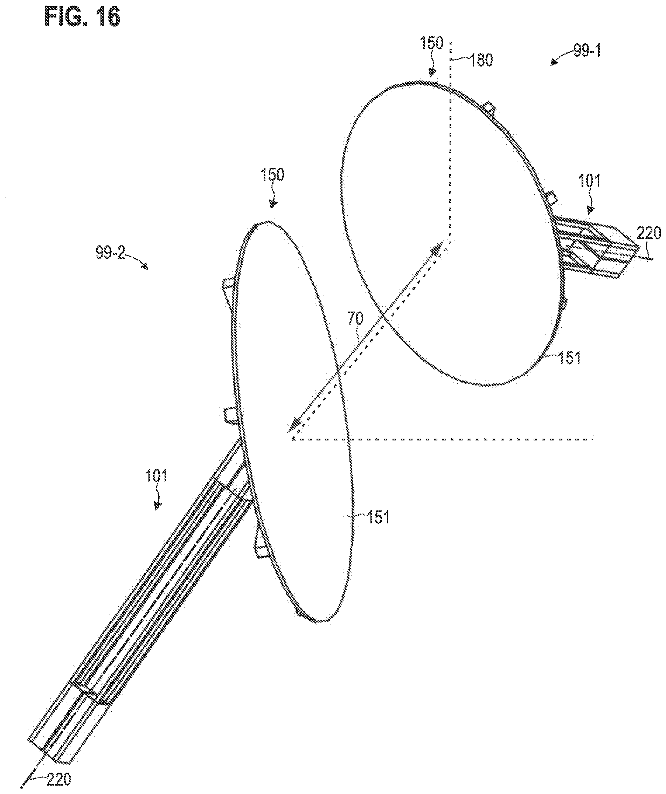

FIG. 16 illustriert Aspekte in Bezug auf einen Scanner 90. Der Scanner 90 umfasst zwei Scaneinheiten 99-1, 99-2, die beispielsweise jeweils gemäß dem Beispiel der FIG. 15 ausgebildet sind. Damit ist der Scanner 90 eingerichtet, um Licht 180 sequenziell an den Vorderseiten der Spiegel 150 der Scaneinheiten 99-1, 99-2 umzulenken (in FIG. 16 ist der entsprechende optische Pfad mit einer gepunkteten Linie dargestellt). FIG. 16 illustriert den Scanner in einem Ruhezustand, d.h. ohne Aktuierung der Scaneinheiten 99-1, 99-2 beispielsweise mittels der Biegepiezoaktuatoren 310, 320.

Beispielsweise wäre es möglich, dass die Torsionsmoden 502 der beiden Scanmodule 101 der Scaneinheiten 99-1, 99-2 angeregt wird, um unterschiedliche Abstrahlwinkel gemäß einer Überlagerungsfigur, die einen 2-D Scanbereich definiert, zu implementieren. Es könnten aber auch andere Freiheitsgrade der Bewegung verwendet werden.

Aus FIG. 16 ist ersichtlich, dass die Aufhängungen der Spiegel 150 der Scaneinheiten 99-1, 99-2 jeweils vier elastische, stabförmige Elemente 101-1, 101-2, 102-1, 102-2 umfassen. Damit sind die Scaneinheiten 99-1, 99-2 gemäß dem Beispiel der FIG. 15 konfiguriert. In anderen Beispielen wäre es aber auch möglich, dass die Aufhängungen der Spiegel 150 weniger oder mehr stabförmige Elemente aufweisen (beispielsweise nur ein stabförmiges elastisches Element, wie in FIGs. 5 und 6, sowie 12 und 13 dargestellt).

Aus dem Beispiel der FIG. 16 ist ersichtlich, dass sich die Scanmodule 100 der Scaneinheiten 99-1, 99-2 jeweils zu unterschiedlichen Richtungen weg von den Rückseiten der Spiegel 150 erstrecken. Es sind rückseitige Aufhängungen durch die Scanmodule 101 implementiert. Die Scanmodule 101 erstrecken sich hin zu Seiten, die der Rückseiten der Spiegel 150 zugewendet sind. In der Spiegelebene der Spiegel 150 der Scaneinheiten 99-1, 99-2 sind keine Aufhängungen vorhanden. Durch eine solche rückseitige 1-Punkt Aufhängung der Spiegel 150 kann erreicht werden, dass die Spiegel 150 der Scaneinheiten 99-1, 99-2 besonders nah beieinander platziert werden können. Durch eine solche hohe Integration des Scanners 90 kann eine kleine Gehäusebauform erzielt werden. Dies fördert die Integration des Scanners 90, beispielsweise in Personenkraftfahrzeugen oder Flugdrohnen etc. Außerdem kann erreicht werden, dass eine effektive Detektorapertur - wenn reflektiertes Licht auch mittels der Spiegel 150 detektiert wird - besonders groß dimensioniert ist. Das wird dadurch begünstigt, da bei großen Spiegeln und großen Drehwinkeln in Referenzimplementierungen signifikante Verschiebungen der Spiegelränder erfolgen. Damit kann es vorkommen, dass die Spiegel in Referenzimplementierungen an Aufhängungen anstoßen, wodurch die maximale Apertur, bzw. Winkel begrenzt wird.

Beispielsweise ist in FIG. 16 ein Abstand 70 zwischen einem Zentrum der Spiegeloberfläche 151 der Scaneinheit 99-1, sowie der Spiegel Oberfläche 151 der Scaneinheit 99-2 dargestellt. Dieser Abstand 70 kann besonders klein dimensioniert sein. Zum Beispiel könnte dieser Abstand 70 nicht größer als das Vierfache des Durchmessers der Spiegeloberfläche 151 sein, optional nicht größer als das Dreifache des Durchmessers, weiter optional nicht größer als das 1,8 -fache des Durchmessers.

In dem Beispiel der FIG. 16 ist die Zentralachse 220 des Scanmoduls 100 um einen Winkel von 45° gegenüber der Oberflächennormalen 155 der Spiegeloberfläche 151 verkippt (cf. FIG. 4). Deshalb kann es erstrebenswert sein, dass eine Torsionsmode 502 sowohl des Scanmoduls 100 der Scaneinheit 99-1, als auch eine Torsionsmode 502 des Scanmoduls 100 der Scaneinheit 99-2 angeregt wird. Diese können entartet sein, wobei jedoch unterschiedliche Resonanzfrequenzen bzw. Maxima der Resonanzkurve möglich sind.

In dem Beispiel der FIG. 16 ist ein Winkel zwischen den Zentralachsen 220 der Scaneinheiten 99-1, 99-2 gleich 90°. Diese Winkel könnte auch um 90° variieren, beispielsweise 90°±25° betragen. Durch eine solche Anordnung kann ein besonders großer Scanbereich implementiert werden.

Wenn beispielsweise Transversalmoden 501 zum Scannen von Licht verwendet werden, kann es wiederum erstrebenswert sein, dass die Zentralachse 220 der Scaneinheiten 99-1, 99-2 einen Winkel von im Wesentlichen 180° einschließen (in FIG. 16 nicht dargestellt), also eine lineare Anordnung der Scaneinheiten 99-1, 99-2 gewählt wird (engl. face-to-face).

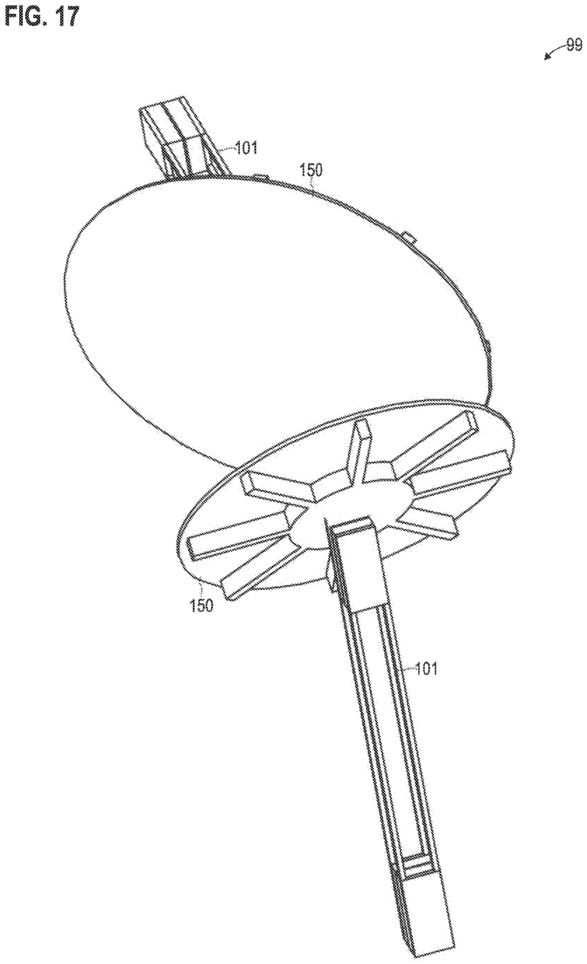

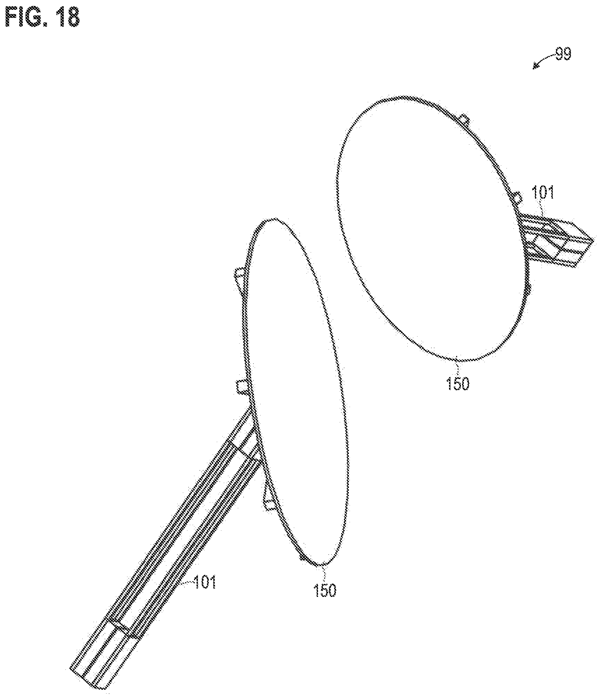

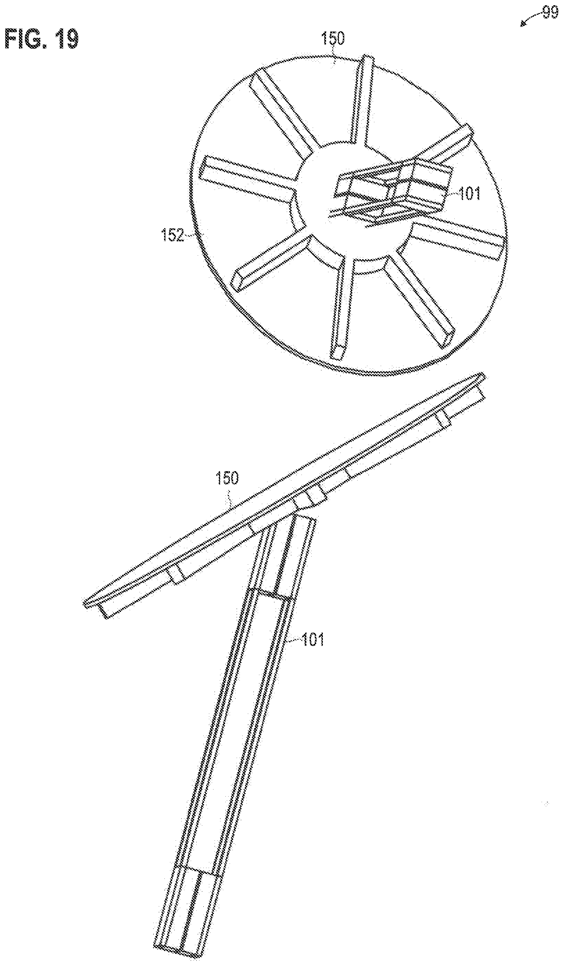

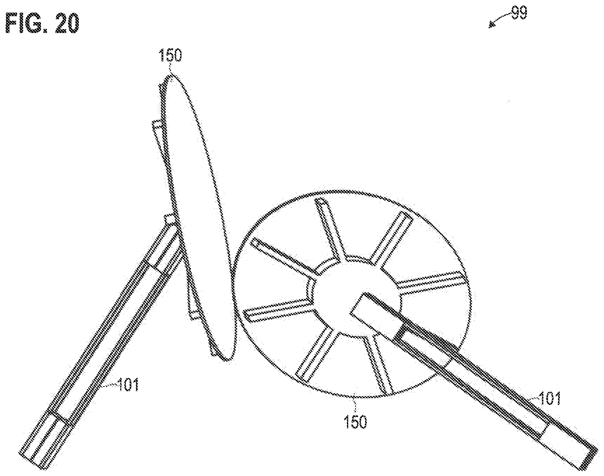

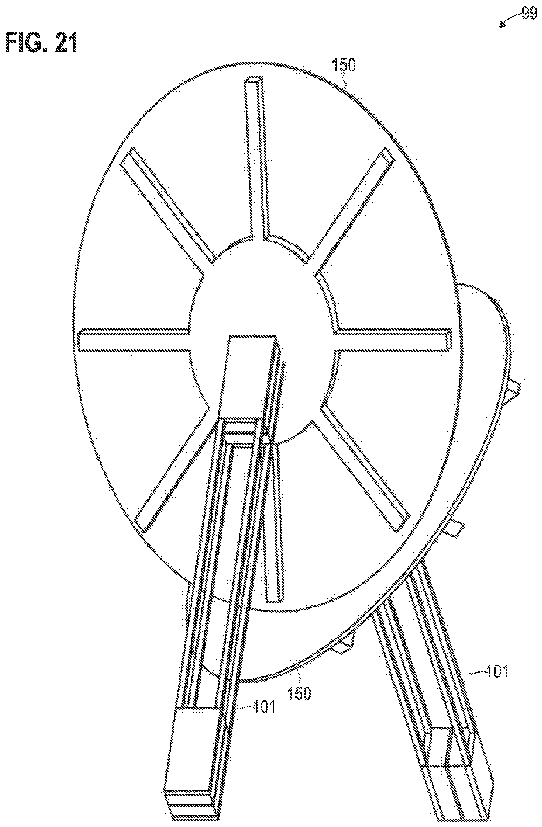

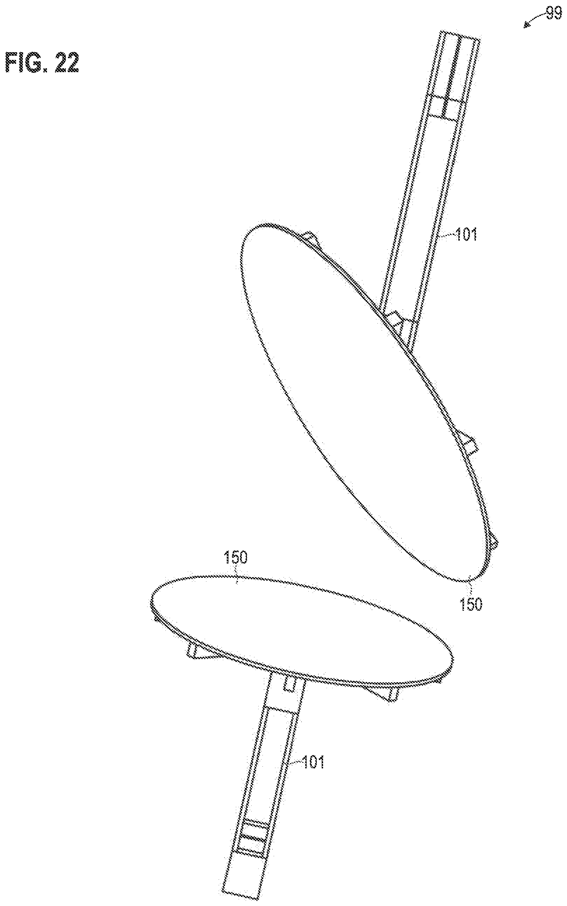

FIGs. 17-22 sind unterschiedliche Darstellungen des Scanners 90 gemäß dem Beispiel der FIG. 16. Dabei sind unterschiedliche Perspektiven dargestellt.

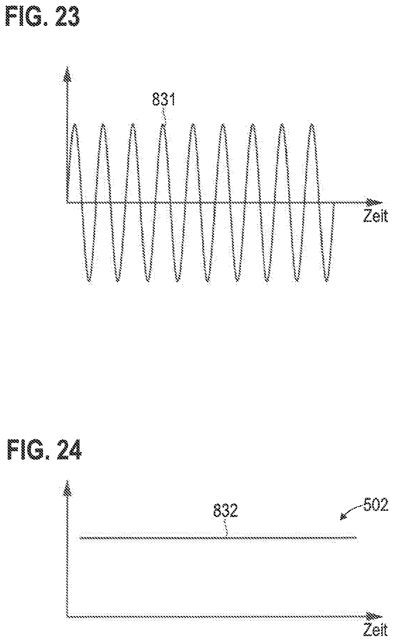

FIG. 23 illustriert Aspekte in Bezug auf die Aktuierung eines Scanmoduls 100. Beispielsweise könnte ein Scanmodul 100 des Scanners 90 gemäß den Beispielen der FIGs. 16-22 entsprechend aktuiert werden.

FIG. 23 illustriert einen Zeitverlauf der Aktuatorbewegung 831 auf. In FIG. 23 ist insbesondere die relative Auslenkung der Biegepiezoaktuatoren 310, 320 gegeneinander als Aktuatorbewegung 831 (cf. FIG. 8) dargestellt. Beispielsweise könnte FIG. 23 also einen Abstand der Enden 315, 325 der Biegepiezoaktuatoren 310, 320 der Beispiele der FIGs. 5 und 6 illustrieren. Es könnten aber auch andere Kenngrößen der Aktuatorbewegung 831 berücksichtigt werden - beispielsweise die Bewegung 399-1 des Biegepiezoaktuators 310 oder aber die Bewegung 399-2 des Biegepiezoaktuators 399-2: Die Aktuatorbewegung 831 ist proportional zu einem durch die Biegepiezoaktuatoren 310, 320 bereitgestellten Kraftfluss sein. Insoweit illustriert FIG. 23 zwar ein Beispiel unter Verwendung von Biegepiezoaktuatoren 310, 320; in anderen Beispielen könnten aber auch andere Aktuatoren, beispielsweise Aktuatoren, die Magnetfelder verwenden etc., verwendet werden, wenn ein entsprechender Kraftfluss bereitgestellt wird.

Die Frequenz der Aktuatorbewegung 831 ist abgestimmt auf die Resonanzkurve 1301, 1302 des gewählten Freiheitsgrads der Bewegung 501, 502 (cf. FIGs. 10 und 14): Durch die Aktuatorbewegung wird ein Freiheitsgrad der Bewegung 501, 502 angeregt. Im Beispiel der FIG. 24 wird die Torsionsmode 502 angeregt, weil die Aktuatorbewegung 831 eine Verkippung der Basis 141 des Scanmoduls 100 bewirkt. Dies ist der Fall, weil die Aktuatorbewegung 831 einen zeitveränderlichen Abstand der Enden 315, 325 der Biegepiezoaktuatoren 310, 320 zueinander bewirkt. In anderen Beispielen könnte durch eine geeignete Aktuatorbewegung auch die Transversalmode 501 angeregt werden.

In dem Beispiel der FIG. 23 weist die Aktuatorbewegung 831 eine konstante Amplitude auf. Dadurch wird die Torsionsmode 502 mit konstanter Amplitude 832 angeregt. Dies ist in FIG. 24 dargestellt (in FIG. 24 ist nicht die instantane Auslenkung der Torsionsmode dargestellt).

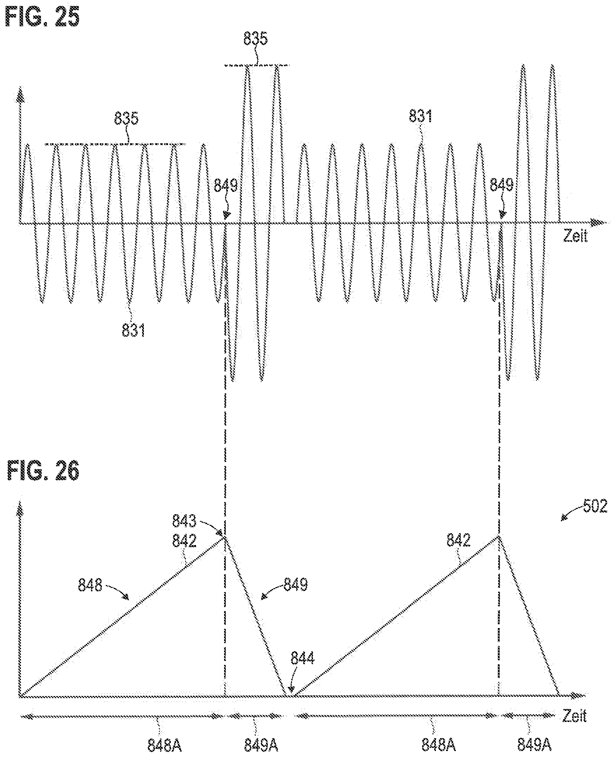

FIGs. 25 und 26 entsprechen grundsätzlich den FIGs. 23 und 24. In dem Beispiel der FIGs. 25 und 26 sind die Biegepiezoaktuatoren 310, 320 jedoch eingerichtet, um die Torsionsmode 502 gemäß einer periodischen Amplitudenmodulationsfunktion 842, die abwechselnd aufsteigende Flanken 848 und absteigende Flanken 849 aufweist, anzuregen. Dazu wird eine geeignete Aktuatorbewegung 831 implementiert.

Aus FIG. 26 ist insbesondere ersichtlich, dass die Länge 848A der aufsteigenden Flanken 848 wesentlich größer ist, als die Länge 849A der absteigenden Flanken 849. Beispielsweise könnte die Länge der aufsteigenden Flanken 848 mindestens doppelt so groß dimensioniert sein, wie die Länge der absteigenden Flanken 849, optional mindestens viermal so groß, weiter optional mindestens zehnmal so groß.

In dem Beispiel der FIG. 25 sind die absteigenden Flanken 849 so kurz dimensioniert, dass deren Längen nicht größer als zwei Periodendauern der Frequenz der resonant aktuierten Torsionsmode 502 bzw. der Frequenz der Aktuatorbewegung 831 sind. Im Allgemeinen könnte die Länge der absteigenden Flanken 849 der Amplitudenmodulationsfunktion 842 nicht größer als zehn Periodendauern der Frequenz der Torsionsmode 502 sein, optional nicht größer als drei Periodendauern, weiter optional nicht größer als zwei Periodendauern.

Durch eine besonders kurze Dimensionierung der Länge 849A der absteigenden Flanken 849 kann erreicht werden, dass das Scanmodul 100 in Bezug auf den entsprechenden Freiheitsgrad der Bewegung 501, 502 nach erfolgter Aktuierung bis zur maximalen Amplitude 843 besonders schnell in den Ruhezustand 844 überführt werden kann - woraufhin eine erneute Aktuierung erfolgen kann. Dies bedeutet, dass eine Reset der Bewegung gemäß dem entsprechenden Freiheitsgrad der Bewegung 501, 502 schnell erfolgen kann. Dies kann insbesondere hilfreich sein, wenn eine Überlagerungsfigur mittels des entsprechenden Freiheitsgrads der Bewegung implementiert wird.

Beispielsweise wäre es möglich, dass LIDAR-Messungen zur Bildgebung nur während den aufsteigenden Flanken 848 durchgeführt werden. Die Menge aller während der Zeitdauer 848A aufgenommenen LIDAR-Messungen kann dabei einem LIDAR-Bild entsprechen, für einen bestimmten Umfeldbereich. Derselbe Umfeldbereich kann nach dem Reset wieder erneut gescannt werden, sodass mit einer bestimmten Bildwiederholfrequenz LIDAR-Bilder bereitgestellt werden. Je kürzer die Länge 849A, desto höher die Bildwiederholfrequenz.

Die kurze Dimensionierung der Länge der absteigenden Flanken 849 kann durch ein Abbremsen der Bewegung gemäß der Torsionsmode 502 während der absteigenden Flanken 849 erzielt werden. Dies bedeutet in anderen Worten, dass die Bewegung gemäß der Torsionsmode 502 aktiv gedämpft wird, d.h. stärker gedämpft wird, als durch eine intrinsische Dämpfung bzw. das Massenträgheitsmoment gegeben. Dazu kann eine geeignete Aktuatorbewegung 831 der Biegepiezoaktuatoren 310, 320 verwendet wird.

Ein solches Abbremsen der Bewegung der Torsionsmode 502 wird insbesondere durch ein Vergrößern der Amplitude 835 der Aktuatorbewegung 831 während den absteigenden Flanken 849 erreicht. Dies kann beispielsweise durch eine Vergrößerung der individuellen Bewegungen 399-1, 399-2 der Biegepiezoaktuatoren 310, 320 erreicht werden. Beispielsweise könnte eine mittlere Amplitude der Aktuatorbewegung 831 während den absteigenden Flanken 849 doppelt so groß sein, wie eine mittlere Amplitude der Aktuatorbewegung 831 während den aufsteigenden Flanken 848, optional mindestens viermal so groß, weiter optional mindestens zehnmal so groß. Durch die Vergrößerung der Amplitude der Aktuatorbewegung 831 während den absteigenden Flanken 849 kann ein besonders schnelles Abbremsen der Bewegung gemäß der Torsionsmode 502 erzielt werden. Dies ist der Fall, weil der Kraftfluss auf das Scanmodul 100 vergrößert werden kann.

Das Abbremsen der Bewegung der Torsionsmode 502 kann auch durch einen Phasensprung 849 in der Aktuatorbewegung 831 erreicht werden. Wiederum kann dieser durch einen Phasensprung in den individuellen Bewegungen 399-1, 399-2 der Biegepiezoaktuatoren 310, 320 erreicht werden. In dem Beispiel der FIG. 25 implementiert der Phasensprung 849 einen Phasenversatz in der Auslenkung jedes der beiden Biegepiezoaktuatoren 310, 320. Beispielsweise weist die individuelle Bewegung 399-1 des Biegepiezoaktuators 310 einen Phasenversatz von 180° zwischen der aufsteigenden Flanke 848 und der absteigenden Flanke 849 auf. Entsprechend weist auch die individuelle Bewegung 399-2 des Biegepiezoaktuators 320 einen Phasenversatz von 180° zwischen der aufsteigenden Flanke 848 und der absteigenden Flanke 849 auf. Dadurch wird der Phasensprung 849 in der in FIG. 25 dargestellten resultierenden Aktuatorbewegung 831 als Abstand zwischen den Enden 315, 325 erreicht. Dadurch wird auch eine gegenphasige Anregung der Torsionsmode 502 im Zeitraum der absteigenden Flanke 849 gegenüber dem Zeitraum der aufsteigenden Flanke 848 erreicht, was in dem Abbremsen der Bewegung gemäß der Torsionsmode 502 während den absteigenden Flanken 849 resultiert.

Während in dem Beispiel der FIG. 25 die Aktuatorbewegung 831 während den aufsteigenden Flanken 848jeweils eine konstante Amplitude 835 aufweist, sowie während den absteigenden Flanken 849 jeweils eine konstante Amplitude 835 aufweist, wäre es in anderen Beispielen auch möglich, dass die Aktuatorbewegung 831 während den aufsteigenden Flanken 848 eine zeitveränderliche Amplitude aufweist und/oder während den absteigenden Flanken 849 eine zeitveränderlichen Amplitude aufweist (in FIG. 25 nicht dargestellt).

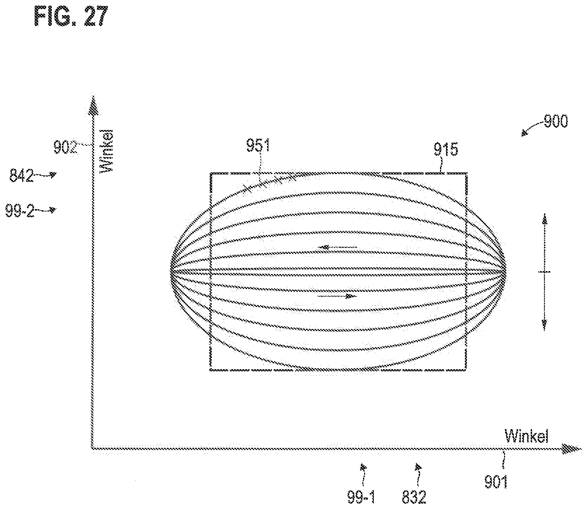

In manchen Beispielen könnte eine erste Scaneinheit 99-1 eines Scanners 90 gemäß den Beispielen der FIGs. 23 und 24 betrieben werden und eine zweite Scaneinheit 99-2 eines Scanners 90 könnte gemäß den Beispielen der FIGs. 25 und 26 betrieben werden. Dies bedeutet in anderen Worten, dass unterschiedlich aktuierte Freiheitsgrade der Bewegung - beispielsweise zwei Torsionsmoden 502 oder zwei Transversalmoden 501 - mit unterschiedlichen Scaneinheiten 99-1, 99-2 assoziiert sein können. Daraus kann eine Überlagerungsfigur erhalten werden, die einen zweidimensionalen Scanbereich ermöglicht. Dies ist in FIG. 27 dargestellt.

FIG. 27 illustriert Aspekte in Bezug auf eine Überlagerungsfigur 900. FIG. 27 illustriert insbesondere Aspekte in Bezug auf einen 2-D Scanbereich 915 (gestrichelte Linie in FIG. 27), der durch die Überlagerungsfigur 900 definiert wird. FIG. 27 zeigt dabei den Scanwinkel 901, der durch die mit konstanter Amplitude 832 aktuierte Torsionsmode 502 (cf. FIGs. 23 und 24) erzielt werden kann, z.B. mittels der Scaneinheit 99-1. FIG. 27 zeigt auch einen Scanwinkel 902, der durch die mit der Amplitudenmodulationsfunktion 842 aktuierte Torsionsmode 502 (cf. FIGs. 25 und 26) erzielt werden kann, z.B. mittels der Scaneinheit 99-2. Durch die Verwendung der beiden Scanwinkel 901, 902 kann ein Abstrahlwinkel der in zwei orthogonalen Raumrichtungen variiert erhalten werden, wodurch ein 2-D Umfeldbereich gescannt werden kann.

In anderen Beispielen könnten aber auch eine Transversalmode 501 mit konstanter Amplitude und eine Transversalmode 501 mit modulierter Amplitude verwendet werden. In noch weiteren Beispielen könnte eine Transversalmode 501 und eine Torsionsmode 502 verwendet werden. Es wäre auch möglich, Transversalmoden 501 unterschiedlicher Ordnung zu verwenden. Es wäre auch möglich, Torsionsmoden 502 unterschiedlicher Ordnung zu verwenden.

Die Überlagerungsfigur 900 gemäß dem Beispiel der FIG. 27 wird erhalten, wenn die Torsionsmoden 502 der Scaneinheiten 99-1, 99-2 die gleiche Frequenz aufweisen. Dadurch werden Knoten in der Überlagerungsfigur 900 - wie sie sonst typisch für Lissajous-Scannen sind - vermieden. Außerdem wird die Überlagerungsfigur 900 gemäß dem Beispiel der FIG. 27 dann erhalten, wenn die Amplitude der Torsionsmode während den aufsteigenden Flanken 848 der Amplitudenmodulationsfunktion 842 vergrößert wird. Dadurch wird nämlich erreicht, dass die Überlagerungsfigur 900 als "sich öffnendes Auge" erhalten wird, d. h. mit zunehmender Amplitude der Transversalmode 501 größere Scanwinkeln 901 erhalten werden (durch die vertikalen gepunkteten Pfeile in FIG. 27 dargestellt). Dadurch können Scanzeilen erhalten werden (horizontal gepunktete Pfeile in FIG. 27), mit welchen das Umfeld des Laserscanners 99 abgetastet werden kann. Durch wiederholtes Aussenden von Lichtpulsen können dann unterschiedliche Bildpunkte 951 erhalten werden. Überlagerungsfiguren mit vielen Knoten werden vermieden, wodurch eine besonders große Bildwiederholfrequenz erzielt werden kann. Außerdem wird vermieden, dass bestimmte Bereiche zwischen den Knoten nicht gescannt werden.

Durch das schnelle Abbremsen während den absteigenden Flanken 849 kann "das sich öffnende Auge" schnell wiederholt werden, d.h. die Überlagerungsfigur 900 kann rasch hintereinander implementiert werden. Totzeiten werden reduziert.

Voranstehend wurden Techniken erläutert, bei denen ein "sich öffnendes Auge" verwendet wird, d.h. ein Reset der Überlagerungsfigur 900 durch die absteigenden Flanken 849 implementiert wird. In anderen Beispielen könnte auch ein "sich schließendes Auge" verwendet werden. Dort können die absteigenden Flanken 849 eine Länge 849A aufweisen, die größer ist, als die Länge 848A der aufsteigenden Flanken 848. Die LIDAR-Bildgebung kann dann primär oder ausschließlich während der absteigenden Flanken 849 erfolgen.

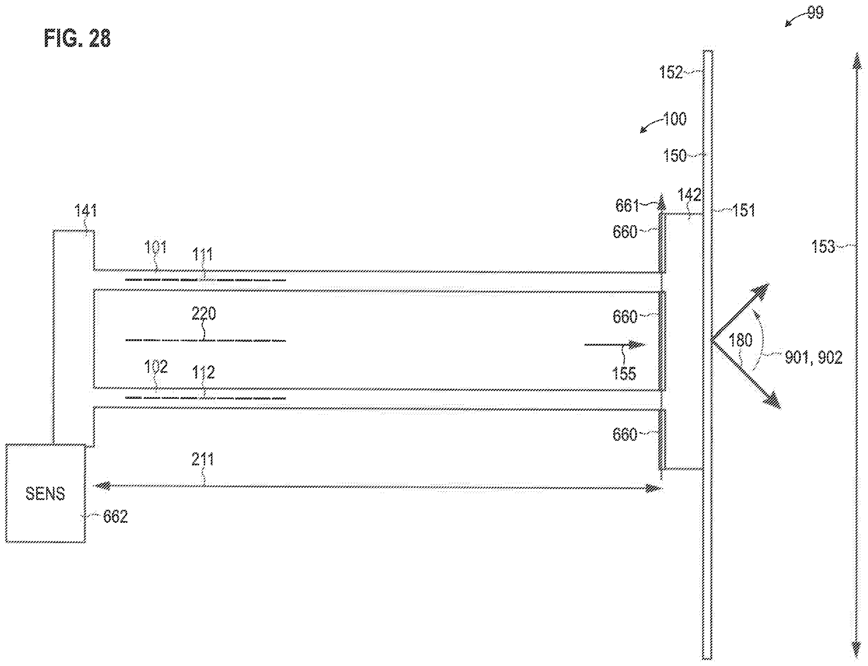

In den verschiedenen hierin beschriebenen Beispielen, kann es erstrebenswert sein, den Scanwinkel 901, 902 der verwendeten Scaneinheiten 99, 99-1, 99-2 besonders gut zu bestimmen. Dazu können Techniken gemäß dem Beispiel der FIG. 28 eingesetzt werden.

Die FIG. 28 entspricht grundsätzlich dem Beispiel der FIG. 1. Erfindungsgemäß ist in FIG. 28 weiterhin ein Magnet 660 am Schnittstellenelement 142 aufgebracht oder angebracht. In der FIG. 28 ist der Magnet 660 als ferromagnetische Beschichtung ausgebildet. In anderen Beispielen wäre es auch möglich, dass der Magnet 660 zum Beispiel als Bulk-Material oder ferromagnetische Pille ausgebildet ist.

In der FIG. 28 ist erfindungsgemäß auch ein Winkelmagnetfeldsensor 662 vorgesehen, der im Streumagnetfeld des Magneten 660 angeordnet ist. Der Winkelmagnetfeldsensor 662 gibt ein Signal aus, welches indikativ für die Torsion 502 des Scanmoduls 100 ist. Z.B. kann das Signal analog sein und einen Signalpegel aufweisen, der je nach Orientierung des Streumagnetfelds im Bereich von z.B. 0° bis 360° zwischen einem Minimum und einem Maximum variiert. Es könnte auch ein digitales Signal ausgegeben werden, welches die Orientierung des Streumagnetfelds digital codiert. Das Signal kann beispielsweise von einer Steuerung empfangen werden und zu geeigneten Ansteuerung der Biegepiezoaktuatoren 310, 320 verwendet werden. Z.B. kann ein Regelkreis implementiert werden, um die Überlagerungsfigur 900 genau zu reproduzieren.

Im Allgenmeinen kann das Signal des Winkelmagnetfeldsensors 662 nicht mit der Stärke des Streumagnetfelds variieren.

Dadurch kann die Bewegung der Torsion 502 genau überwacht werden. Dadurch kann wiederum genau auf den entsprechenden Winkel 901, 902 zurückgeschlossen werden, der durch die jeweilige Scaneinheit 99 implementiert wird. Dadurch kann eine besonders hohe laterale Auflösung für eine LIDAR-Messung bereitgestellt werden.

In der FIG. 28 ist die Rückseite 152 des Spiegels 150 zwischen der Spiegeloberfläche 151 und dem Magneten 660 und dem Winkelmagnetfeldsensor 162 angeordnet. Dies bedeutet, dass sowohl der Magnet 660, als auch der Winkelmagnetfeldsensor 662 rückwärtig in Bezug auf die Spiegeloberfläche 151 angeordnet sind. Dies bedeutet, dass sowohl der Magnet 660, als auch der Winkelmagnetfeldsensor 662 auf einer der Rückseite 152 zugewendeten Seite des Spiegels 150 angeordnet sind. Dadurch kann eine besonders hohe Integration erzielt werden. Außerdem kann der Winkelmagnetfeldsensor 162 besonders nah bei dem Magneten 660 angeordnet werden, sodass ein hohes Signal-zu-Rauschverhältnis erreicht werden kann. Dadurch kann der entsprechende Winkel 901, 902 auch besonders genau bestimmt werden. Insbesondere kann eine bauliche Trennung zwischen dem optischen Pfad des Lichts 180 und dem Winkelmagnetfeldsensor 662 besonders einfach erzielt werden, weil der optische Pfad des Lichts 180 auf einer der Vorderseite 151 zugewendeten Seite des Spiegels 150 verläuft. Weil der Magnet 660 und der Winkelmagnetfeldsensor 662 rückwärtig in Bezug auf den Spiegel 150 angeordnet sind, kann auch der Abstand 70 bei einem Scanner 90 der mehrere Scaneinheiten 99 umfasst, besonders gering dimensioniert werden.

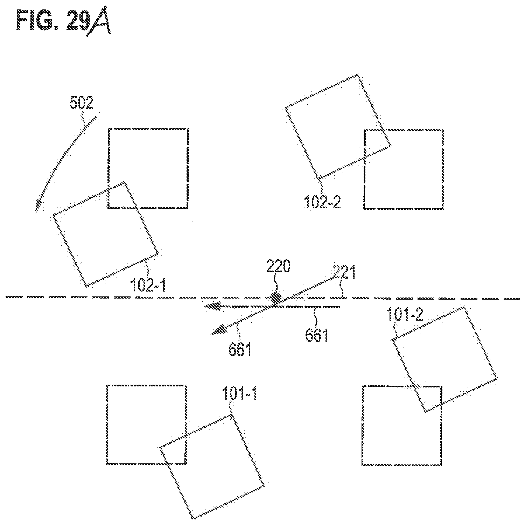

In der FIG. 28 ist das magnetische Moment 661 des Magneten 660 senkrecht zur Zentralachse 220 bzw. zur Torsionsachse der Torsionsmode 502 (cf. FIG. 29A) angeordnet. Im Allgemeinen kann der Magnet 660 ein magnetisches Moment 661 aufweisen, dass zumindest eine Komponente senkrecht zur Torsionsachse aufweist. Dadurch kann beispielsweise ein in-plane Winkelmagnetfeldsensor 662, der eine Sensitivität in der Zeichenebene der FIG. 29A aufweist, verwendet werden. In anderen Beispielen könnte auch ein Winkelmagnetfeldsensor 662 mit einer out-of-plane Sensitivität verwendet werden.

In dem Beispiel der FIGs. 28 und 29A ist das magnetische Moment 661 weiterhin symmetrisch zur Zentralachse 220 bzw. zur Torsionsachse der Torsion 502 angeordnet. Dies bedeutet, dass das magnetische Moment 661 eine Ausdehnung auf beiden Seiten der Zentralachse bzw. der Torsionsachse aufweist. Es muss keine Spiegelsymmetrie vorliegen. Gleichzeitig ist der Winkelmagnetfeldsensor 662 jedoch exzentrisch in Bezug auf die Zentralachse 220 angeordnet. Dies kann beispielsweise das gemessene Signal verringern, wobei jedoch eine flexiblere Wahl in Bezug auf die Anbringung des Winkelmagnetfeldsensor 662 ermöglicht wird. Beispielsweise kann der Winkelmagnetfeldsensor 662 radial angrenzend an die Basis 141 angebracht werden. Es wäre in anderen Beispielen aber auch möglich, dass der Winkelmagnetfeldsensor 662 angrenzend an den Magneten 660 angeordnet ist, d.h. nicht entlang der Zentralachse 220 versetzt gegenüber dem Magneten 660 angeordnet ist.

Der Magnet 660 ist nahe bei der Zentralachse 220 angebracht. Der Magnet 660 ist insbesondere symmetrisch in Bezug auf die Zentralachse 220 angebracht. Dadurch wird vermieden, dass das Massenträgheitsmoment der bewegten Teile, d.h. des Schnittstellenelements 142 und des Spiegels 150 durch Vorsehen des magnetischen Materials zu stark zunimmt. Dadurch können Torsionsmoden mit hoher Eigenfrequenz erzielt werden. Durch die symmetrische Anordnung wird eine Asymmetrie vermieden, welche die Torsionsmode beeinflussen würde.

In der FIG. 28 ist der Magnet 660 starr mit dem Spiegel 150 verbunden, d.h. ist im bewegten Koordinatensystem angeordnet; während der Winkelmagnetfeldsensor 662 im Referenzkoordinatensystem der Basis 141 angeordnet ist. Derart können Signale des Winkelmagnetfeldsensor 662 besonders einfach ausgelesen werden, weil keine Überführung vom bewegten Koordinatensystem ins Referenzkoordinatensystem - indem typischerweise die Steuerung angeordnet ist - erfolgen muss. In anderen Beispielen wäre es aber auch möglich, dass eine umgekehrte Anordnung vorgesehen ist, d.h. dass der Winkelmagnetfeldsensor662 im bewegten Koordinatensystem angeordnet ist und der Magnet 660 im Referenzkoordinatensystem der Basis 141 angeordnet ist. Beispielsweise könnte dann das Signal des Winkelmagnetfeldsensor 662 drahtlos übertragen werden, beispielsweise durch Lichtmodulation. Alternativ könnten auch entlang der elastischen Elemente 101, 102 elektrische Leiterbahnen - z.B. durch metallische Beschichtung oder Dotierung - vorgesehen sein, die eine Übertragung der Signale des Winkelmagnetfeldsensor 662 ermöglichen. Eine solche Implementierung kann beispielsweise hilfreich sein, wenn ein und derselbe Magnet 660 ein Streumagnetfeld für mehrere Winkelmagnetfeldsensor 662 bereitstellt, die mit unterschiedlichen Scaneinheiten 99, 99-1, 99-2 eines Scanners 90 assoziiert sind bzw. in den bewegten Koordinatensystemen unterschiedlicher Scaneinheiten 99, 99-1, 99-2 angeordnet sind. Die unterschiedlichen Winkelmagnetfeldsensoren 662 können also starr mit den Umlenkeinheiten unterschiedlicher Scaneinheiten 99, 99-1, 99-2 verbunden sein. Beispielsweise kann der Magnet 660 besonders stark ausgebildet werden, sodass ein großes Streumagnetfeld verfügbar ist.

In einem Beispiel gemäß FIG. 28 - bei dem die Magneten 660 im bewegten Koordinatensystem angebracht sind - kann eine einfache Trennung der Streumagnetfelder von mit unterschiedlichen Scaneinheiten 99-1, 99-2 assoziierten Magneten 660 wie folgt erfolgen: bei einer in-plane Sensitivität der Winkelmagnetfeldsensor 662 und einer senkrechten Anordnung des Torsionsachsen 220 (cf. FIG. 16) weisen die mit unterschiedlichen Scaneinheiten 99-1, 99-2 assoziierten Winkelmagnetfeldsensoren 662 keine oder nur eine geringe Querempfindlichkeit auf. Dies ist der Fall, weil die entsprechenden Streumagnetfelder in senkrecht zueinander orientierten Ebenen rotieren.

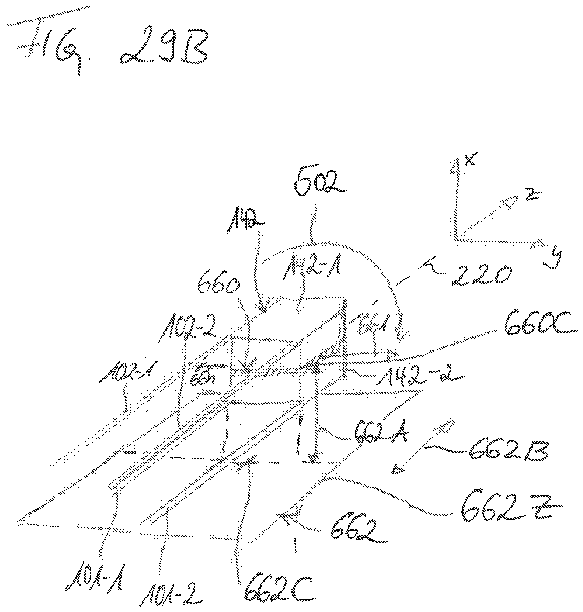

FIG. 29B illustriert Aspekte in Bezug auf eine Anordnung des Magneten 660 in Bezug auf den Winkelmagnetfeldsensor 662. Das Beispiel der FIG. 29B entspricht grundsätzlich dem Beispiel der FIG. 15 (in FIG. 29B ist der Spiegel 150 zum Zwecke der Übersichtlichkeit nicht dargestellt; die Perspektive der FIG. 29 entspricht aber der Perspektive der FIG. 15, wo der Spiegel 150 auch dargestellt ist).

Der Magnet 660 ist am Schnittstellenelement 142 angebracht. Insbesondere ist der Magnet 660 in das Schnittstellenelement 142 eingebettet. Dies könnte z.B. dadurch erreicht werden, dass ein zweiteiliges Schnittstellenelement 142-1, 142-2 verwendet wird, etwa gemäß FIG. 15. Dann kann der Magnet 660 als Abstandsstück zwischen den Kontaktflächen 160 der beiden Schnittstellenelementen 142-1, 142-2 vorgesehen sein.

In FIG. 29B erstrecken sich die elastischen Elemente entlang der z-Achse. Die Torsionsachse bzw. die Zentralachse 220 ist damit parallel zur z-Achse. Die Magnetisierung 661 des Magneten 660 ist senkrecht zur z-Achse, entlang der y-Achse orientiert. Die Magnetisierung 661 ist symmetrisch in Bezug auf die Torsionsachse bzw. die Zentralachse 220 angeordnet.

Der Winkelmagnetfeldsensor 662 ist exzentrisch zur Zentralachse 220 angeordnet, nämlich im Beispiel der FIG. 29B entlang der x-Achse versetzt (im Allgemeinen könnte der Winkelmagnetfeldsensor 662 auch entlang der y-Achse versetzt angeordnet sein). Ein entsprechender Abstand 662A zwischen dem Magneten 660 und einer sensitiven Fläche 662Z des Winkelmagnetfeldsensors 662 ist in FIG. 29B dargestellt.

Der Winkelmagnetfeldsensor 662 weist die sensitive Fläche 662Z auf. Diese erstreckt sich in der yz-Ebene. Der Winkelmagnetfeldsensor 662 weist eine in-plane Sensitivität auf: deshalb gibt der Winkelmagnetfeldsensor 662 ein Signal aus, das indikativ für die Orientierung des Streumagnetfelds der Magnetisierung 661 in der yz-Ebene ist. Die Stärke des Streumagnetfelds geht nicht in das Signal ein.

Der Winkelmagnetfeldsensor 662 ist gegenüber dem Magneten 660 entlang der z-Achse versetzt angeordnet, der entsprechende Abstand 662B ist eingezeichnet (z.B. könnte der Abstand 662B in Bezug auf ein Zentrum des Magneten 660 entlang der z-Achse definiert sein). Im Beispiel der FIG. 29B ist das Zentrum 662C der sensitiven Fläche 662Z des Winkelmagnetfeldsensors 662 ausgerichtet an einer der Basis 141 zugewendeten Kante 660C des Magneten 660, d.h. am Übergang zwischen den elastischen Elementen 101-1, 101-2, 102-1, 102-2 und dem Schnittstellenelement 142 (in FIG. 29B durch die in x-Richtung orientierten gestrichelten Linien indiziert). Durch den Versatz 662B wird erreicht, dass das Streumagnetfeld in der in der yz-Ebene orientierten sensitiven Fläche 662Z rotiert, wenn der Magnet gemäß der Torsion 502 verdreht wird. Durch den in der Größe begrenzten Versatz 662B werden nicht-lineare Zusammenhänge zwischen Torsion 502 und dem Winkel des Streumagnetfelds vermieden.

Nachfolgend wird die Sensitivität des Winkelmagnetfeldsensors 662 in Bezug auf eine Bewegung der Basis 142 diskutiert. Ohne Torsion der Basis 141, d.h. im Ruhezustand, ist die Magnetisierung 661 entlang der y-Achse ausgerichtet (wie in FIG. 29B dargestellt). Dann ist das Streumagnetfeld in der sensitiven Fläche 662Z auch entlang der y-Achse orientiert. Wenn eine Torsion 502 die Basis 142 verdreht, dann verdreht sich auch die Magnetisierung 661. Z.B. entspräche eine Torsionswinkel von 90° einer Orientierung der Magnetisierung 661 entlang der negativen x-Achse. Aufgrund der exzentrischen Anordnung des Winkelmagnetfeldsensors 662 ergibt sich dadurch eine effektive Orientierung des Streumagnetfelds entlang der z-Richtung. Diese Verdrehung des Streumagnetfelds in der sensitiven Fläche 662Z wird durch den Winkelmagnetfeldsensor 662 gemessen.

Bei einer transversalen Auslenkung der Basis 142 entlang der x-Achse ändert sich die Orientierung des Streumagnetfelds in der sensitiven Ebene 662Z nicht besonders stark. Deshalb wird das Messsignal nicht signifikant verfälscht. Eine transversale Auslenkung der Basis 142 entlang der y-Achse ändert die Orientierung des Streumagnetfelds in der sensitiven Ebene 662Z jedoch stärker, als die Auslenkung entlang der x-Achse. Um diesen Effekt zu kompensieren, wäre es möglich, zwei Winkelmagnetfeldsensoren vorzusehen, die in Bezug auf die Zentralachse 220 gespiegelt angeordnet sind (in FIG. 29B nicht gezeigt): die beiden Winkelmagnetfeldsensoren können also denselben Abstand 662A zum Magneten 660 aufweisen, jedoch einmal entlang der positiven x-Achse und einmal entlang der negativen x-Achse. Der Abstand 662B kann gleich sein. Die Winkelmagnetfeldsensoren können also angeordnet sein, um in Bezug auf die Torsion 502 entsprechende Signale auszugeben - d.h. z.B. gleiche oder z.B. positiv korrelierte - und in Bezug auf die transversale Auslenkung komplementäre Signale auszugeben: Bei einer transversalen Auslenkung der Basis 142 entlang der y-Achse ergeben sich entgegengesetzte Beiträge zum Signal der beiden Winkelmagnetfeldsensoren. Durch eine Differenzbildung kann die transversale Auslenkung quantifiziert werden: Dadurch kann die Regelung - neben der Torsion 502 - auch transversale Auslenkungen berücksichtigen, z.B. dämpfen. Dies bedeutet, dass eine entsprechende Regelschleife eine Soll-Amplitude der transversalen Auslenkung von im Wesentlichen Null vorgibt.

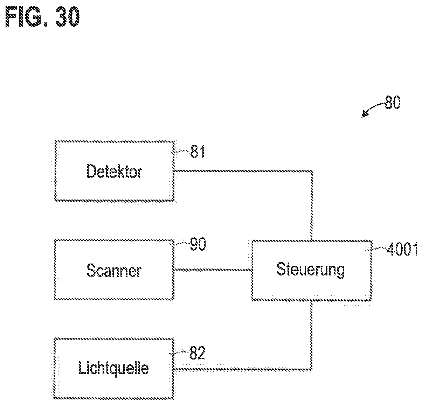

FIG. 30 illustriert Aspekte in Bezug auf ein LIDAR-System 80. Das LIDAR-System 80 umfasst einen Laserscanner 90, der beispielsweise gemäß den verschiedenen hierin beschriebenen Implementierungen ausgebildet sein kann. Das LIDAR-System umfasst auch eine Lichtquelle 81. Beispielsweise könnte die Lichtquelle 81 als Laserdiode ausgebildet sein, die gepulstes Laserlicht 180 im nahen Infrarotbereich mit einer Pulslänge im Bereich von Nanosekunden aussendet.

Das Licht 180 der Lichtquelle 81 kann dann auf einer oder mehreren Spiegeloberfläche 151 des Scanners 90 auftreffen. Je nach Orientierung der Umlenkeinheit wird das Licht unter unterschiedlichen Winkeln 901, 902 umgelenkt. Das von der Lichtquelle 81 ausgesendete und von der Spiegeloberfläche des Scanners 90 umgelenkt Licht wird oftmals auch als Primärlicht bezeichnet.

Das Primärlicht kann dann ein Umfeldobjekt des LIDAR-Systems 80 treffen. Dass derart reflektierte Primärlicht wird als Sekundärlicht bezeichnet. Das Sekundärlicht kann von einem Detektor 82 des LIDAR-Systems 80 detektiert werden. Basierend auf einer Laufzeit - die als Zeitversatz zwischen dem Aussenden des Primärlicht durch die Lichtquelle 81 und dem Detektieren des Sekundärlichts durch den Detektor 82 bestimmt werden kann - , kann mittels einer Steuerung 4001 ein Abstand zwischen der Lichtquelle 81 bzw. dem Detektor 82 und dem Umfeldobjekt bestimmt werden.

In manchen Beispielen kann die Emitterapertur gleich der Detektorapertur sein. Dies bedeutet, dass derselbe Scanner dazu verwendet werden kann, um die Detektorapertur zu scannen. Beispielsweise können dieselben Spiegel verwendet werden, um Primärlicht auszusenden und Sekundärlicht zu detektieren. Dann kann ein Strahlteiler vorgesehen sein, um Primär- und Sekundärlicht zu trennen. Solche Techniken können es ermöglichen, eine besonders hohe Sensitivität zu erzielen. Dies ist der Fall, da die Detektorapertur auf die Richtung ausgerichtet und begrenzt werden kann, aus welcher das Sekundärlicht eintrifft. Umgebungslicht wird durch die Raumfilterung reduziert, weil die Detektorapertur kleiner dimensioniert werden kann.

Außerdem kann zusätzlich zu dieser Abstandsmessung auch eine laterale Position des Umfeldobjekts bestimmt werden, beispielsweise durch die Steuerung 4001. Dies kann durch Überwachung der Position bzw. Orientierung der ein oder mehreren Umlenkeinheiten des Laserscanners 99 erfolgen. Dabei kann die Position bzw. Orientierung ein oder mehreren Umlenkeinheiten im Moment des Auftreffens des Lichts 180 einem Umlenkwinkel 901, 902 entsprechen; daraus kann auf die laterale Position des Umfeldobjekts zurückgeschlossen werden. Beispielsweise kann es möglich sein, die Position bzw. Orientierung der Umlenkeinheit basierend auf einem Signal des Winkelmagnetfeldsensors 662 zu bestimmen.

Indem das Signal des Winkelmagnetfeldsensors 662 beim Bestimmen der lateralen Position der Umfeldobjekte berücksichtigt wird, kann es möglich sein, die laterale Position der Umfeldobjekte mit einer besonders großen Genauigkeit zu bestimmen. Insbesondere im Vergleich zu Techniken, die lediglich ein Treibersignal zum Ansteuern von Aktuatoren der Bewegung beim Bestimmen der lateralen Position der Umfeldobjekte berücksichtigen, kann derart eine erhöhte Genauigkeit erreicht werden.

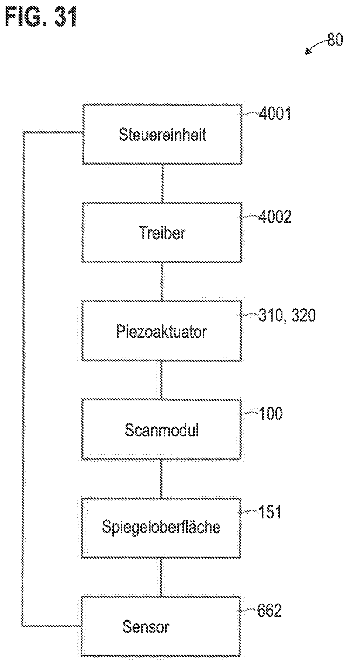

FIG. 31 illustriert Aspekte in Bezug auf ein LIDAR-System 80. Das LIDAR-System 80 umfasst eine Steuereinheit 4001, die beispielsweise als Mikroprozessor oder applikationsspezifischer integrierter Schaltkreis (ASIC) implementiert werden könnte. Die Steuereinheit 4001 könnte auch als feldprogrammierbares Array (FPGA) implementiert werden. Die Steuereinheit 4001 ist eingerichtet, um Steuersignale an einen Treiber 4002 auszugeben. Beispielsweise könnten die Steuersignale in digitaler oder analoger Form ausgegeben werden.

Der Treiber 4002 ist wiederum eingerichtet, um ein oder mehrere Spannungssignalen zu erzeugen, und diese an entsprechende elektrische Kontakte der Piezoaktuatoren 310, 320 auszugeben. Typische Amplituden der Spannungssignalen liegen im Bereich von 50 V bis 250 V.

Die Piezoaktuatoren 310, 320 sind wiederum mit dem Scanmodul 100 gekoppelt, wie beispielsweise voranstehenden Bezug auf die FIGs. 5 und 6 beschrieben. Dadurch können ein oder mehrere Freiheitsgrade der Bewegung des Scanmoduls 100, insbesondere von einem oder mehreren Stützelementen 101, 102 des Scanmoduls 100 angeregt werden. Dadurch wird die Umlenkeinheit ausgelenkt. Dadurch kann der Umfeldbereich des Laserscanners 99 mit Licht 180 gescannt werden. Insbesondere kann die Torsionsmode 502 angeregt werden.

Die Steuerung 4001 kann eingerichtet sein, um die Piezoaktuatoren 310, 320 geeignet anzuregen, um eine Überlagerungsfigur zum Scannen eines 2-D Umfeldbereichs zu implementieren. Dazu können Techniken betreffend die Amplitudenmodulationsfunktion 842 umgesetzt werden. In dem Beispiel der FIG. 31 kann die Steuereinheit 4001 insbesondere eingerichtet sein, um den Treiber 4002 bzw. die Biegepiezoaktuatoren 310, 320 gemäß den Aktuatorbewegungen 831 der Beispiele der FIGs. 23 und 25 anzusteuern. Dann kann die Überlagerungsfigur 900 implementiert werden.

In FIG. 31 ist ferner dargestellt, dass eine Kopplung zwischen der Steuereinheit 4001 und dem Winkelmagnetfeldsensor 662 vorhanden ist. Die Steuereinheit 4001 kann eingerichtet sein, um den oder die Piezoaktuatoren 310, 320 basierend auf dem Signal des Winkelmagnetfeldsensors 662 anzusteuern. Durch solche Techniken kann eine Überwachung der Bewegung der Spiegeloberfläche 151 durch die Steuereinheit 4001 erfolgen. Falls benötigt kann die Steuereinheit 4001 die Ansteuerung des Treibers 4002 anpassen, um Abweichungen zwischen einer gewünschten Bewegung der Spiegeloberfläche 151 und einer beobachteten Bewegung der Spiegeloberfläche 151 zu reduzieren.

Beispielsweise wäre es möglich, dass eine Regelschleife (engl. closed-loop control) implementiert wird. Beispielsweise könnte die Regelschleife die Soll-Amplitude der Bewegung als Führungsgröße umfassen. Beispielsweise könnte die Regelschleife die Ist-Amplitude der Bewegung als Regelgröße umfassen. Dabei könnte die Ist-Amplitude der Bewegung basierend auf dem Signal des Winkelmagnetfeldsensors 662 bestimmt werden.

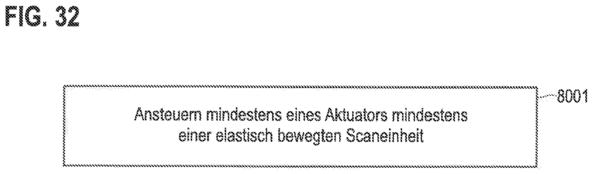

FIG. 32 ist ein Flussdiagramm eines beispielhaften Verfahrens. In 8001 wird ein Aktuator, beispielsweise ein Biegepiezoaktuator, angesteuert, um einen ersten Freiheitsgrad der Bewegung einer elastisch bewegten Scaneinheit gemäß einer periodischen Amplitudenmodulationsfunktion anzuregen. Dabei weist die periodische Amplitudenmodulationsfunktion abwechselnd angeordnete aufsteigende Flanken und absteigende Flanken auf. Eine Länge der aufsteigenden Flanken kann dabei mindestens doppelt so groß sein, wie eine Länge der absteigenden Flanken, optional mindestens viermal so groß, weiter optional mindestens zehnmal so groß.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Beispielsweise wurden voranstehend Techniken beschrieben, bei denen eine Überlagerungsfigur mit kurzen absteigenden Flanken und langen aufsteigenden Flanken implementiert wird. Entsprechend wäre es beispielsweise auch möglich, dass vergleichsweise lange absteigende Flanken und vergleichsweise kurze aufsteigende Flanken verwendet werden; in einem solchen Beispiel könnte es beispielsweise möglich sein, dass die LIDAR-Bildgebung im Wesentlichen während den vergleichsweise langen absteigenden Flanken erfolgt. In manchen Beispielen wäre es auch möglich, dass gleich lange auf- und absteigende Flanken verwendet werden; auch in solchen Fällen kann ein effizientes Scannen durch eine geeignete Implementierung der Überlagerungsfigur, beispielsweise ohne oder mit wenigen Knoten - gewährleistet werden.

Weiterhin wurden voranstehend Techniken beschrieben, bei denen zwei zeitüberlappend zwei Freiheitsgrade der Bewegung mit derselben Frequenz angeregt werden. In manchen Beispielen wäre es aber auch möglich, dass ein erster Freiheitsgrad der Bewegung mit einer ersten Frequenz angeregt wird und ein zweiter Freiheitsgrad der Bewegung mit einer zweiten Frequenz angeregt wird, die verschieden von der ersten Frequenz ist, beispielsweise um Faktor 2 größer. Dadurch kann eine Überlagerungsfigur beispielsweise einen Knoten aufweisen, was die Effizienz des Scannens des Umfeldbereichs herabsetzen kann, aber gleichzeitig die Wahl der Freiheitsgrade der Bewegung flexibler gestalten kann.

Weiterhin wurden voranstehend verschiedene Beispielen Bezug auf eine Überlagerungsfigur beschrieben, die durch eine zeitliche Überlagerung einer ersten Torsionsmode, die mit einer ersten Scaneinheit assoziiert ist, und einer zweiten Torsionsmode, die mit einer zweiten Scaneinheit assoziiert ist, beschrieben. Entsprechende Techniken können aber auch implementiert werden, wenn beispielsweise zwei Transversalmode, die mit unterschiedlichen Scaneinheiten assoziiert sind, verwendet werden.

Weiterhin wurden voranstehenden verschiedene Techniken in Bezug auf die Bewegung von Scaneinheiten im Zusammenhang mit LIDAR-Messungen beschrieben. Entsprechende Techniken können aber auch in anderen Anwendungen eingesetzt werden, z.B. für Projektoren oder Laser-Scanning-Mikroskope, etc..

## Patentansprüche

1. Scanner (90), der umfasst:
- eine Scaneinheit (99, 99-1, 99-2) mit zwei Paaren von elastischen Elementen, die sich zwischen einer Basis (141) und einer Umlenkeinheit (150) erstrecken und jeweils einem entsprechenden Schnittstellenelement (142, 142-1, 142-2) zugeordnet sind, wobei die Schnittstellenelemente einstückig mit dem jeweiligen Paar von elastischen Elementen ausgebildet sind und eingerichtet sind, um die Umlenkeinheit zu fixieren, wobei die Scaneinheit (99, 99-1, 99-2) eingerichtet ist, um Licht (180) mittels Torsion (502) der zwei Paare von elastischen Elementen (101, 101-1, 101-2, 102, 102-1, 102-2) an der Umlenkeinheit (150) unter unterschiedlichen Winkeln (901, 902) umzulenken,
- einen Magnet (660), der eingerichtet ist, um ein Streumagnetfeld zu erzeugen und der an den Schnittstellenelementen aufgebracht oder eingebettet ist und wobei die den zwei Paaren von elastischen Elementen zugeordneten Schnittstellenelemente (142-1, 142-2) über den Magneten (660) miteinander verbunden sind, und
- einen Winkelmagnetfeldsensor (662), der im Streumagnetfeld angeordnet ist und der eingerichtet ist, um ein Signal auszugeben, das indikativ für die Torsion (502) ist,
wobei ein magnetisches Moment des Magneten (660) eine Komponente aufweist, die senkrecht zur Torsionsachse (220) der Torsion (502) orientiert ist.

2. Scanner (90) nach Anspruch 1,
wobei die Umlenkeinheit (150) einen Spiegel mit einer Spiegeloberfläche (151), die eingerichtet ist, um das Licht (180) zu reflektieren, und einer der Spiegeloberfläche (151) gegenüberliegenden Rückseite (152) umfasst,
wobei die Rückseite (152) zwischen der Spiegeloberfläche (151) und dem Magneten (660) angeordnet ist.

3. Scanner (90) nach Anspruch 2,
wobei die elastischen Elemente jeweils als Stab ausgebildet sind und sich von der der Spiegeloberfläche (151) abgewendeten Seite hin zur Basis (141) erstrecken.

4. Scanner (90) nach einem der voranstehenden Ansprüche,
wobei ein magnetisches Moment des Magneten (660) symmetrisch zur Torsionsachse (220) der Torsion (502) angeordnet ist.

5. Scanner (90) nach einem der voranstehenden Ansprüche,
wobei der Winkelmagnetfeldsensor (662) eine in-plane Sensitivität aufweist.

6. Scanner (90) nach einem der voranstehenden Ansprüche,
wobei der Winkelmagnetfeldsensor (662) exzentrisch zur Torsionsachse (220) der Torsion (502) angeordnet ist.

7. Scanner (90) nach einem der voranstehenden Ansprüche,
wobei der Winkelmagnetfeldsensor (662) eingerichtet ist, um ein Signal auszugeben, das indikativ für eine Orientierung des Streumagnetfelds ist.

8. Scanner (90) nach einem der voranstehenden Ansprüche, der weiterhin umfasst:
- mindestens einen Aktuator, der eingerichtet ist, um die Torsion durch resonante Anregung einer Torsionsmode und gemäß einer periodischen Amplitudenmodulationsfunktion, die abwechselnd angeordnete aufsteigende und absteigende Flanken aufweist, anzuregen.

9. Scanner nach einem der voranstehenden Ansprüche,
wobei ein Zentrum (662C) einer sensitiven Fläche (662Z) des Winkelmagnetfeldsensors (662) entlang der Torsionsachse (220) um einen Abstand 662B gegenüber dem Magneten (660) versetzt angeordnet ist.

10. Scanner nach einem der voranstehenden Ansprüche,
wobei ein Zentrum (662C) einer sensitiven Fläche (662Z) des Winkelmagnetfeldsensors (662) an einer der Basis (142) zugewendeten Kante (660C) des Magneten (660) ausgerichtet ist.

11. Scanner nach einem der voranstehenden Ansprüche, der weiterhin umfasst:
- eine Steuerung, die eingerichtet ist, um eine Regelschleife zu implementieren, welche eine Ist-Amplitude der Bewegung als Regelgröße umfasst, wobei die Ist-Amplitude der Bewegung basierend auf dem Signal des Winkelmagnetfeldsensors (662) bestimmt wird.

12. Scanner nach einem der voranstehenden Ansprüche, der weiterhin umfasst:
- einen weiteren Winkelmagnetfeldsensor,
wobei der Winkelmagnetfeldsensor (662) und der weitere Winkelmagnetfeldsensor angeordnet sind, um in Bezug auf die Torsion (502) entsprechende Signale auszugeben und um in Bezug auf eine transversale Auslenkung des elastischen Elements komplementäre Signale auszugeben.

13. Scanner nach Anspruch 11 und 12,
wobei die Steuerung eingerichtet ist, um die transversale Auslenkung durch Differenzbildung der Signale des Winkelmagnetfeldsensors und des weiteren Winkelmagnetfeldsensors zu bestimmen.

14. Scanner (90) nach einem der voranstehenden Ansprüche, der weiterhin umfasst:
- eine weitere Scaneinheit (99, 99-1, 99-2) mit einem weiteren elastischen Element (101, 101-1, 101-2, 102, 102-1, 102-2), das sich zwischen einer weiteren Basis (141) und einer weiteren Umlenkeinheit (150) erstreckt, wobei die weitere Scaneinheit (99, 99-1, 99-2) eingerichtet ist, um Licht (180) mittels einer weiteren Torsion (502) des weiteren elastischen Elements an der Umlenkeinheit (150) unter unterschiedlichen Winkeln (901, 902) umzulenken,
- einen weiteren Magneten (660), der eingerichtet ist, um ein weiteres Streumagnetfeld zu erzeugen, und
- einen weiteren Winkelmagnetfeldsensor (662), der im weiteren Streumagnetfeld angeordnet ist und der eingerichtet ist, um ein weiteres Signal auszugeben, das indikativ für die weitere Torsion (502) ist.

15. Scanner (90) nach Anspruch 14,
wobei ein magnetisches Moment (661) des weiteren Magneten (660) einen Winkel von 90° ± 10° mit der Torsionsachse (220) der Torsion (502) einschließt und bei der Torsion (502) in einer ersten Ebene rotiert,
wobei ein magnetisches Moment (661) des weiteren Magneten (660) einen Winkel von 90° ± 10° mit der Torsionsachse (220) der weiteren Torsion (502) einschließt und bei der weiteren Torsion (502) in einer zweiten Ebene rotiert,
wobei die erste Ebene und die zweite Ebene einen Winkel von 90° ± 10° miteinander einschließen.

## Claims

1. Scanner (90) comprising:
- a scanning unit (99, 99-1, 99-2) having two pairs of elastic elements, which extend between a base (141) and a deflection unit (150) and, in each case, are assigned to a corresponding interface element (142, 142-1, 142-2), wherein the interface elements are formed integrally with the respective pair of elastic elements and are designed to secure the deflection unit, wherein the scanning unit (99, 99-1, 99-2) is designed to deflect light (180) to the deflection unit (150) at different angles (901, 902) by means of torsion (502) of the two pairs of elastic elements (101, 101-1, 101-2, 102, 102-1, 102-2),
- a magnet (660), which is designed to generate a stray magnetic field and which is mounted on or embedded in the interface elements and wherein the interface elements (142-1, 142-2) assigned to the two pairs of elastic elements are connected to each other via the magnet (660), and
- an angular magnetic field sensor (662), which is arranged in the stray magnetic field and which is designed to output a signal indicative of the torsion (502),
wherein a magnetic moment of the magnet (660) has a component, which is oriented perpendicular to the torsion axis (220) of the torsion (502).

2. Scanner (90) according to claim 1,
wherein the deflection unit (150) comprises a mirror having a mirror surface (151), which is designed to reflect the light (180), and a rear side (152) opposite the mirror surface (151),
wherein the rear side (152) is arranged between the mirror surface (151) and the magnet (660).

3. Scanner (90) according to claim 2,
wherein the elastic elements are formed, in each case, as a rod and extend from the side facing away from the mirror surface (151) to the base (141).

4. Scanner (90) according to any one of the preceding claims,
wherein a magnetic moment of the magnet (660) is arranged symmetrically to the torsion axis (220) of the torsion (502).

5. Scanner (90) according to any one of the preceding claims,
wherein the angular magnetic field sensor (662) has an in-plane sensitivity.

6. Scanner (90) according to any one of the preceding claims,
wherein the angular magnetic field sensor (662) is arranged eccentrically to the torsion axis (220) of the torsion (502).

7. Scanner (90) according to any one of the preceding claims,
wherein the angular magnetic field sensor (662) is designed to output a signal indicative of an orientation of the stray magnetic field.

8. Scanner (90) according to any one of the preceding claims further comprising:
- at least one actuator, which is designed to excite torsion by means of resonant excitation of a torsion mode and in accordance with a periodic amplitude modulation function, which has alternately arranged rising and falling edges.

9. Scanner according to any one of the preceding claims,
wherein a centre (662C) of a sensitive surface (662Z) of the angular magnetic field sensor (662) is arranged along the torsion axis (220) offset by a gap 662B to the magnet (660).

10. Scanner according to any one of the preceding claims,
wherein a centre (662C) of a sensitive surface (662Z) of the angular magnetic field sensor (662) is aligned with an edge (660C) of the magnet (660) facing towards the base (142).

11. Scanner according to any one of the preceding claims further comprising:
- a control unit, which is designed to implement a control loop, which comprises an actual amplitude of movement as a control variable, wherein the actual amplitude of movement is determined based on the signal from the angular magnetic field sensor (662).

12. Scanner according to any one of the preceding claims further comprising:
- a further angular magnetic field sensor,
wherein the angular magnetic field sensor (662) and the further angular magnetic field sensor are arranged to output corresponding signals relating to torsion (502) and to output complementary signals relating to a transversal displacement of the elastic element.

13. Scanner according to claims 11 and 12,
wherein the control unit is designed to determine the transversal displacement by taking the difference between the signals from the angular magnetic field sensor and the further angular magnetic field sensor.

14. Scanner (90) according to any one of the preceding claims further comprising:
- a further scanning unit (99, 99-1, 99-2) having a further elastic element (101, 101-1, 101-2, 102, 102-1, 102-2), which extends between a further base (141) and a further deflection unit (150), wherein the further scanning unit (99, 99-1, 99-2) is designed to deflect light (180) to the deflection unit (150) at different angles (901, 902) by means of further torsion (502) of the further elastic element,
- a further magnet (660), which is designed to generate a further stray magnetic field, and
- a further angular magnetic field sensor (662), which is arranged in the further stray magnetic field and which is designed to output a further signal indicative of the further torsion (502).

15. Scanner (90) according to claim 14,
wherein a magnetic moment (661) of the further magnet (660) encloses an angle of 90° ±10° with the torsion axis (220) of the torsion (502) and rotates on a first plane in the event of torsion (502),
wherein a magnetic moment (661) of the further magnet (660) encloses an angle of 90° ±10° with the torsion axis (220) of the further torsion (502) and rotates on a second plane in the event of torsion (502),
wherein the first plane and the second plane together enclose an angle of 90° ±10°.

## Revendications

1. Scanner (90) qui comprend :
- une unité de balayage (99, 99-1, 99-2) avec deux paires d'éléments élastiques qui s'étendent entre une base (141) et une unité de déviation (150) et sont associées respectivement à un élément d'interface (142, 142-1, 142-2) correspondant, dans lequel les éléments d'interface sont réalisés d'un seul tenant avec la paire respective d'éléments élastiques et sont conçus afin de fixer l'unité de déviation, dans lequel l'unité de balayage (99, 99-1, 99-2) est conçue afin de dévier de la lumière (180) par la torsion (502) des deux paires d'éléments élastiques (101, 101-1, 101-2, 102, 102-1, 102-2) au niveau de l'unité de déviation (150) selon différents angles (901, 902),
- un aimant (660) qui est conçu afin de générer un champ magnétique de fuite et qui est appliqué ou intégré au niveau des éléments d'interface et dans lequel les éléments d'interface (142-1, 142-2) associés aux deux paires d'éléments élastiques sont reliés entre eux via les aimants (660), et
- un capteur de champ magnétique angulaire (662) qui est agencé dans le champ magnétique de fuite et qui est conçu afin d'émettre un signal qui est indicatif de la torsion (502),
dans lequel un couple magnétique de l'aimant (660) présente un composant qui est orienté perpendiculairement à l'axe de torsion (220) de la torsion (502).

2. Scanner (90) selon la revendication 1,
dans lequel l'unité de renvoi (150) comporte un miroir avec une surface de miroir (151) qui est conçue afin de réfléchir la lumière (180), et un côté arrière (152) opposé à la surface de miroir (151),
dans lequel le côté arrière (152) est agencé entre la surface de miroir (151) et l'aimant (660).

3. Scanner (90) selon la revendication 2,
dans lequel les éléments élastiques sont réalisés respectivement comme barre et s'étendent depuis le côté opposé à la surface de miroir (151) à la base (141).

4. Scanner (90) selon l'une des revendications précédentes,
dans lequel un couple magnétique de l'aimant (660) est agencé de manière symétrique à l'axe de torsion (220) de la torsion (502).

5. Scanner (90) selon l'une des revendications précédentes,
dans lequel le capteur de champ magnétique angulaire (662) présente une sensibilité dans le plan.

6. Scanner (90) selon l'une des revendications précédentes,
dans lequel le capteur de champ magnétique angulaire (662) est agencé de manière excentrée par rapport à l'axe de torsion (220) de la torsion (502).

7. Scanner (90) selon l'une des revendications précédentes,
dans lequel le capteur de champ magnétique angulaire (662) est conçu afin d'émettre un signal qui est indicateur d'une orientation du champ magnétique de fuite.

8. Scanner (90) selon l'une des revendications précédentes, qui comporte en outre :
- au moins un actionneur qui est conçu afin d'exciter la torsion par excitation résonante d'un mode de torsion et selon une fonction de modulation d'amplitude périodique qui présente des flancs ascendants et descendants agencés en alternance.

9. Scanner selon l'une des revendications précédentes,
dans lequel un centre (662C) d'une surface sensible (662Z) du capteur de champ magnétique angulaire (662) est agencé en déport le long de l'axe de torsion (220) d'une distance 662B par rapport à l'aimant (660).

10. Scanner selon l'une des revendications précédentes,
dans lequel un centre (662C) d'une surface sensible (662Z) du capteur de champ magnétique angulaire (662) est orienté au niveau d'une arête (660C) tournée vers la base (142) de l'aimant (660).

11. Scanner selon l'une des revendications précédentes, qui comporte en outre :
- une commande qui est conçue afin d'implémenter une boucle de régulation qui comporte une amplitude réelle du mouvement comme grandeur de régulation, dans lequel l'amplitude réelle du mouvement est déterminée sur la base du signal du capteur de champ magnétique angulaire (662).

12. Scanner selon l'une des revendications précédentes, qui comporte en outre :
- un autre capteur de champ magnétique angulaire,
dans lequel le capteur de champ magnétique angulaire (662) et l'autre capteur de champ magnétique angulaire sont agencés afin d'émettre des signaux correspondants par rapport à la torsion (502) et afin d'émettre des signaux complémentaires par rapport à un déplacement transversal de l'élément élastique.

13. Scanner selon les revendications 11 et 12,
dans lequel la commande est conçue afin de déterminer le déplacement transversal par formation de différence des signaux du capteur de champ magnétique angulaire et de l'autre capteur de champ magnétique angulaire.

14. Scanner (90) selon l'une des revendications précédentes, qui comporte en outre :
- une autre unité de balayage (99, 99-1, 99-2) avec un autre élément élastique (101, 101-1, 101-2, 102, 102-1, 102-2) qui s'étend entre une autre base (141) et une autre unité de déviation (150), dans lequel l'autre unité de balayage (99, 99-1, 99-2) est conçue afin de dévier de la lumière (180) au moyen d'une autre torsion (502) de l'autre élément élastique au niveau de l'unité de déviation (150) selon différents angles (901, 902),
- un autre aimant (660) qui est conçu afin de générer un autre champ magnétique de fuite, et
- un autre capteur de champ magnétique angulaire (662) qui est agencé dans l'autre champ magnétique de fuite et qui est conçu afin d'émettre un autre signal qui est indicateur de l'autre torsion (502).

15. Scanner (90) selon la revendication 14,
dans lequel un couple magnétique (661) de l'autre aimant (660) forme un angle de 90° ±10° avec l'axe de torsion (220) de la torsion (502) et tourne lors de la torsion (502) dans un premier plan,
dans lequel un couple magnétique (661) de l'autre aimant (660) forme un angle de 90° ±10° avec l'axe de torsion (220) de l'autre torsion (502) et tourne lors de l'autre torsion (502) dans un second plan,
dans lequel le premier plan et le second plan forment entre eux un angle de 90° ±10°.
